# EUROPEAN PATENT APPLICATION

(11) **EP 2 770 608 A2**
(43) Date of publication of application: **27.08.2014**
(21) Application number: 12841231.9
(22) Date of filing: 19.10.2012
(51) Int. Cl.: H02J 7/04, B60L 11/18

(54) **APPARATUS FOR CONTROLLING HOME COMMUNICATION**

(30) Priority: 20.10.2011 US 201161549253 P; 20.10.2011 US 201161549257 P; 20.10.2011 US 201161549259 P; 20.10.2011 US 201161549260 P; 20.10.2011 US 201161549261 P; 20.10.2011 US 201161549262 P; 20.10.2011 US 201161549263 P
(71) Applicant: LSIS Co., Ltd., Anyang-si, Gyeonggi-do 431-080 (KR)
(72) Inventor: CHAUHDARY, Sajjad Hussain, Seoul 157-010 (KR); HAHN, Kwang Soo, Seoul 133-718 (KR)
(74) Representative: Lang, Johannes
(86) International application number: PCT/KR2012/008629
(87) International publication number: WO 2013/058615

(57) **Abstract**

Provided is an operating method of a home communication control device installed at home and controlling charging of an electric vehicle. The method includes: receiving first battery information on a first battery of the electric vehicle; receiving second battery information on a second battery of a home power storage device; receiving power policy information from a power supply facility; determining an available option for charging of the first battery on the basis of the first battery information, the second battery information, and the power policy information; and controlling the charging of the first battery according to the available option.

## Description

### BACKGROUND

The present disclosure relates to a home communication control device and an operating method thereof, and particularly, to a device and method for controlling charging or discharging of an electric vehicle and a home power storage device.

In order to control global warming through the G20 and G8 countries, a smart grid solution and real-time use of an electric vehicle are suggested to reduce CO2.

An electronic vehicle includes at least one electric motor using an electrical energy of a rechargeable battery. This rechargeable battery may be connected to an electric outlet in order for recharging. In general, it takes a few hours to charge a battery of an electric vehicle. During this process, a user may want to obtain several information.

Moreover, electric grids may have a time interval at which an electrical demand exceeds a limitation. In order to prevent this, constructing a power plant additionally may rather disturb the reduction of CO2. Accordingly, adaptively coping with the demand of electricity by using a large capacity battery of an electric vehicle is required.

For this, users, electric vehicles, and electric power supply facilities may need to exchange information. To this end, various communication techniques may be used.

A wireless home area network (W-HAN), a wireless personal area network (W-PAN), and a wireless frequency transceiver perform communication through a wireless frequency in a short distance area between devices. A Zigbee transceiver may be used as an example. Zigbee is a standard protocol designed for wireless frequency communication in a short distance area. The Zigbee transceiver establishes a mesh network on the basis of IEEE 802.15.4.

A wireless local area network (WLAN) transceiver performs communication through a wireless frequency between devices away from each other by more than 10 m. A Wi-Fi device may be used as an example. The Wi-Fi device follows the IEEE 802.11 standards.

A power line communication (PLC) technique may be used to establish a network between devices through a power line. This technique is limited to an area of up to 100 m.

A wide area network (WAN) is a communication network covering a wide area. The Transmission Control Protocol / Internet Protocol (TCP/IP), that is, a standard protocol, may be used as an example. Additionally, a CDMA or GSM network may be used as an example of a wireless broadband network.

In order to adaptively cope with the demand of electricity by using a high capacity battery of an electric vehicle, demands for exchanging information between users, electric vehicles, and electric power supply facilities are emerging.

### SUMMARY

Embodiments provide a device, system, and method for adaptively coping with the demand of electricity by exchanging various information between power use subjects such as users, electric vehicles, and electric power supply facilities.

In one embodiment, provided is an operating method of a home communication control device installed at home and controlling charging of an electric vehicle. The method includes: receiving first battery information on a first battery of the electric vehicle; receiving second battery information on a second battery of a home power storage device; receiving power policy information from a power supply facility; determining an available option for charging of the first battery on the basis of the first battery information, the second battery information, and the power policy information; and controlling the charging of the first battery according to the available option.

In another embodiment, provided is an operating method of a home communication control device installed at home and controlling discharging of an electric vehicle. The method includes: receiving first battery information on a first battery of the electric vehicle; receiving second battery information on a second battery of a home power storage device; receiving power policy information from a power supply facility; determining an available option for discharging of the first battery on the basis of the first battery information, the second battery information, and the power policy information; and controlling the discharging of the first battery according to the available option.

In further another embodiment, provided is an operating method of a home communication control device installed at home and controlling charging of a home power storage device. The method includes: receiving first battery information on a first battery of an electric vehicle; receiving second battery information on a second battery of the home power storage device; receiving power policy information from a power supply facility; determining an available option for charging of the second battery on the basis of the first battery information, the second battery information, and the power policy information; and controlling the charging of the second battery according to the available option.

In still further another embodiment, provided is an operating method of a home communication control device installed at home and controlling discharging of a home power storage device. The method includes: receiving first battery information on a first battery of an electric vehicle; receiving second battery information on a second battery of the home power storage device; receiving power policy information from a power supply facility; determining an available option for discharging of the second battery on the basis of the first battery information, the second battery information, and the power policy information; and controlling the discharging of the second battery according to the available option.

In still further another embodiment, provided is an operating method of a home communication control device installed at home The method includes: receiving first battery information on a first battery of an electric vehicle; receiving second battery information on a second battery of a home power storage device; receiving power policy information from a power supply facility; determining at least one recommendation power control content on the basis of the first battery information, the second battery information, and the power policy information; and controlling at least one of the first battery and the second battery according to a control content selected from the at least one recommendation power control content.

In still further another embodiment, provided is an operating method of a home communication control device installed at home. The method includes: receiving scheduling information of an electric vehicle; receiving power policy information from a power supply facility; determining at least one recommendation power control content on the basis of the scheduling information of the electric vehicle and the power policy information; and controlling at least one of a first battery and a second battery according to a control content selected from the at least one recommendation power control content.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of a network topology according to an embodiment of the present invention.
Fig. 2 is a block diagram illustrating an EVSE according to an embodiment of the present invention.
Fig. 3 is a block diagram illustrating a home communication control device according to an embodiment of the present invention.
Fig. 4 is a block diagram of an HPS according to an embodiment of the present invention.
Fig. 5 is a block diagram of an UTD according to an embodiment of the present invention.
Fig. 6 is a view illustrating an EV according to an embodiment of the present invention.
Fig. 7 is the first part of a ladder diagram illustrating a charging method of an EV according to an embodiment of the present invention.
Fig. 8 is the rear part of a ladder diagram illustrating a charging method of an EV according to an embodiment of the present invention.
Fig. 9 is a view illustrating a screen displayed on an UTD according to another embodiment of the present invention.
Fig. 10 is a view illustrating a screen displayed on an UTD according to another embodiment of the present invention.
Fig. 11 is a view illustrating a screen displayed on an UTD according to another embodiment of the present invention.
Fig. 12 is a view illustrating a screen displayed on an UTD according to another embodiment of the present invention.
Fig. 13 is a view illustrating a screen displayed on an UTD according to another embodiment of the present invention.
Fig. 14 is a view illustrating a screen displayed on an UTD according to another embodiment of the present invention.
Fig. 15 is the first part of a ladder diagram illustrating a discharging method of an EV according to an embodiment of the present invention.
Fig. 16 is the rear part of a ladder diagram illustrating a discharging method of an EV according to an embodiment of the present invention.
Fig. 17 is a view illustrating a screen displayed on an UTD according to another embodiment of the present invention.
Fig. 18 is a view illustrating a screen displayed on an UTD according to another embodiment of the present invention.
Fig. 19 is a view illustrating a screen displayed on an UTD according to another embodiment of the present invention.
Fig. 20 is a view illustrating a screen displayed on an UTD according to another embodiment of the present invention.
Fig. 21 is a view illustrating a screen displayed on an UTD according to another embodiment of the present invention.
Fig. 22 is a view illustrating a screen displayed on an UTD according to another embodiment of the present invention.
Fig. 23 is the first part of a ladder diagram illustrating a charging method of an HPS according to an embodiment of the present invention.
Fig. 24 is the rear part of a ladder diagram illustrating a charging method of an HPS according to an embodiment of the present invention.
Fig. 25 is the first part of a ladder diagram illustrating a discharging method of an HPS according to an embodiment of the present invention.
Fig. 26 is the rear part of a ladder diagram illustrating a discharging method of an HPS according to an embodiment of the present invention.
Fig. 27 is a ladder diagram illustrating a charging/discharging recommendation method according to an embodiment of the present invention.
Fig. 28 is the first part of a ladder diagram illustrating a time scheduling method according to an embodiment of the present invention. Fig. 29 is the rear part of a ladder diagram illustrating a time scheduling method according to an embodiment of the present invention.
Fig. 30 is a ladder diagram illustrating an interruption information providing method according to an embodiment of the present invention.

### DETAILED DESCRIPTION OF THE EMBODIMENTS

Hereinafter, a mobile terminal relating to the present invention is described in more detail with reference to the drawings. The suffixes "module" and "unit" for components used in the description below are assigned or mixed in consideration of easiness in writing the specification and, do not have distinctive meanings or roles by themselves.

Especially, an electric power source in the specification represents an electric power transmitter and an electric power sink represents an electric power receiver.

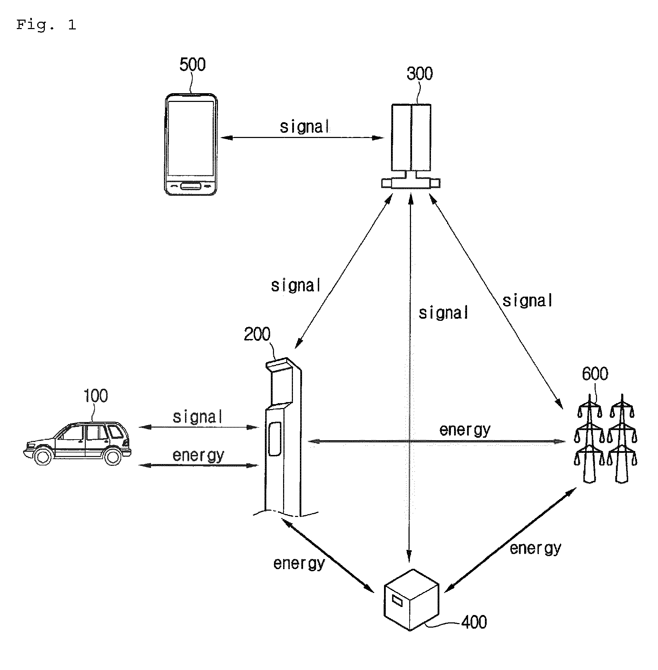

Then, a network topology according to an embodiment of the present invention will be described with reference to Fig. 1.

Fig. 1 is a block diagram of a network topology according to an embodiment of the present invention.

As shown in Fig. 1, the network topology includes an electric vehicle 100, an electric vehicle power supply device 200, a home communication control device 300, a home power storage device 400, a user terminal device 500, and a power supply facility 600.

For convenience of description, the following abbreviations are used together. An electric vehicle is referred to as its acronym, that is, an EV. Additionally, an electric power supplying device is referred to as an EVSE, that is, the acronym of electric vehicle supply equipment. A home communication control device is referred to as an HCCS, that is, the acronym of a home communication control system. A home power storage device is referred to as an HPS, that is, the acronym of a home power storage. A user terminal device is referred to as its acronym, that is, an UTD.

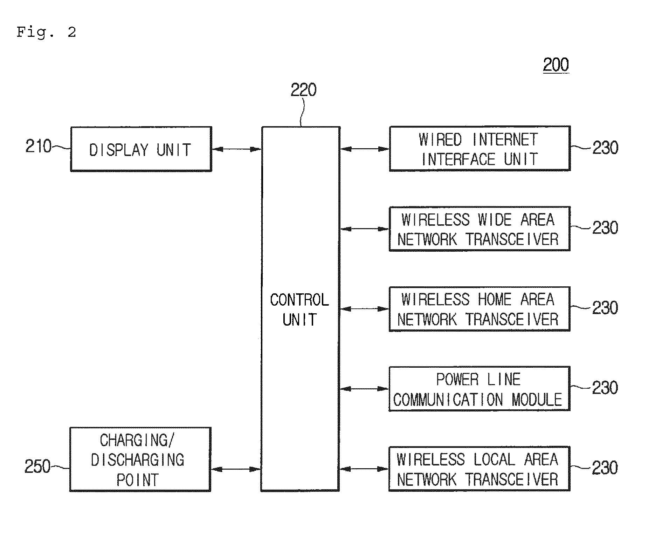

Then, an EVSE according to an embodiment of the present invention will be described with reference to Fig. 2.

Fig. 2 is a block diagram illustrating an EVSE according to an embodiment of the present invention.

The EVSE 200 is used to charge the EV 100 by receiving electricity from the HPS 400 and the power supply facility 600 or discharge the EV 100 by supplying the electricity of the EV 100 to the HPS 400 and the power supply facility 600.

As shown in Fig. 2, the EVSE 200 includes a display unit 210, a control unit 220, at least one communication module 230, and a charging/discharging point 250. The at least one communication module 230 may include at least one of a wired internet interface unit, a wireless wide area network (WWAN) transceiver, a wireless home area network (WHAN) transceiver, a power line communication (PLC) module, and a wireless local area network (WLAN) transceiver. The control unit 220 displays a charging status, a discharging status, a notification message, and a charging interruption message on the display unit 210. The control unit 220 may communicate with the EV 100, the HCCS 300, the HPS 400, the UTD 500, and the power supply facility 600 through the at least one communication module 230. The charging/discharging point 250 may correspond to an SAE J1772 outlet.

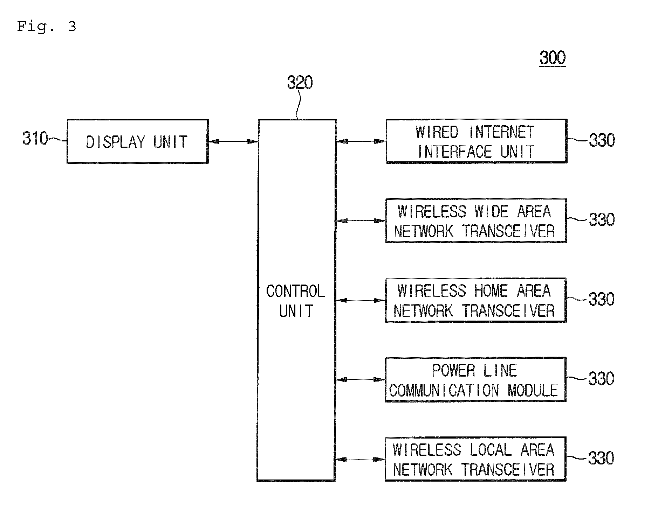

Then, an HCCS according to an embodiment of the present invention will be described with reference to Fig. 3.

Fig. 3 is a block diagram of an HCCS according to an embodiment of the present invention.

The HCCS 300 is installed at home and includes a display unit 310, a control unit 320, and at least one communication module 330. The control unit 320 displays a system status such as a processing status and a communication status on the display unit 310. The control unit 320 may communicate with the EV 100, the EVSE 200, the HPS 400, the UTD 500, and the power supply facility 600 through the at least one communication module 330. The control unit 320 may perform charging management, discharging management, scheduling, and price comparison. The at least one communication module 330 may include at least one of a wired internet interface unit, a WWAN transceiver, a WHAN transceiver, a PLC module, and a WLAN transceiver.

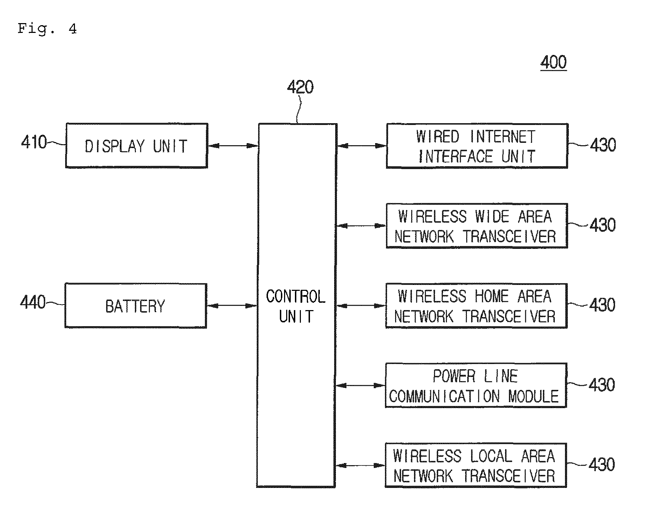

Then, the HPS 400 according to an embodiment of the present invention will be described with reference to Fig. 4.

Fig. 4 is a block diagram of an HPS according to an embodiment of the present invention.

The HPS 400 includes a display unit 410, a control unit 420, at least one communication module 430, and a battery 440. The control unit 420 may communicate with the EV 100, the EVSE 200, the HCCS 300, the UTD 500, and the power supply facility 600 through the at least one communication module 430. The control unit 420 controls charging and discharging of the battery 440. Especially, the control unit 420 may charge the battery 440 with a power from the power supply facility 600 at an off time at which energy consumption is less and may discharge a power from the battery 440 to the power supply facility 600 at a peak time at which energy consumption is greater. Additionally, the control unit 420 discharges the power of the battery 440 into the EV 100 and charges the battery 400 with the power of the EV 100. The at least one communication module 430 may include at least one of a wired internet interface unit, a WWAN transceiver, a WHAN transceiver, a PLC module, and a WLAN transceiver.

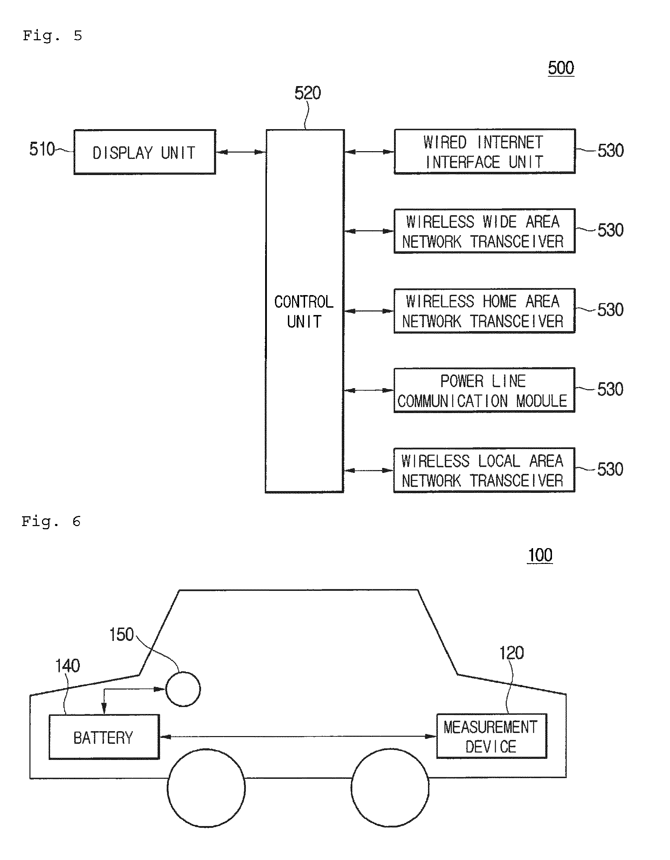

Then, the UTD 500 according to an embodiment of the present invention will be described with reference to Fig. 5.

Fig. 5 is a block diagram of an UTD according to an embodiment of the present invention.

The UTD 500 includes a display unit 510, a control unit 520, and at least one communication module 530. The control unit 520 displays information on billing, pricing, and timing on the display unit 510. The control unit 520 may communicate with the EV 100, the EVSE 200, the HCCS 300, the HPS 400, and the power supply facility 600 through the at least one communication module 530. The at least one communication module 530 may include at least one of a wired internet interface unit, a WWAN transceiver, a WHAN transceiver, a PLC module, and a WLAN transceiver.

Then, the EV 100 according to an embodiment of the present invention will be described with reference to Fig. 6.

Fig. 6 is a view illustrating an EV according to an embodiment of the present invention.

As shown in Fig. 6, the EV 100 includes a measurement device 120 such as an end user measurement device (EUMD), a battery 140, and a charging/discharging point 150. The measurement device 120 measures a status of the battery 140. The charging/discharging point 150 may correspond to an SAE J1772 inlet. The charging/discharging point 150 is connected to the charging/discharging point 250 by a user.

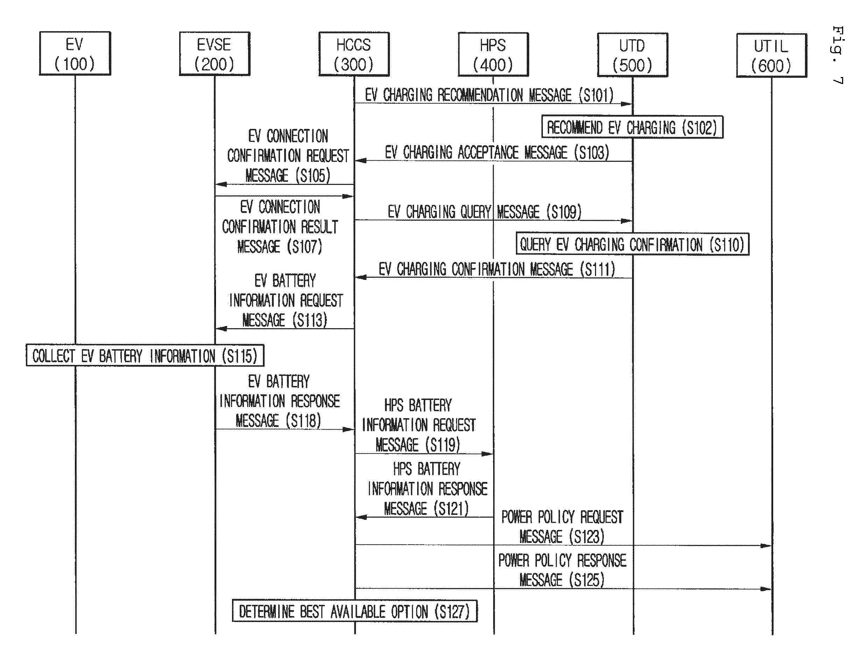

Then, a method of charging an EV according to an embodiment of the present invention will be described with reference to Figs. 7 to 14.

Fig. 7 is the first part of a ladder diagram illustrating a charging method of an EV according to an embodiment of the present invention.

If detecting the charging of the EV 100 is necessary, the HCCS 300 transmits an EV charging recommendation message to the UTD 500 in operation S101. At this point, the EV charging recommendation message may include information on the reason that the charging of the EV 100 is necessary.

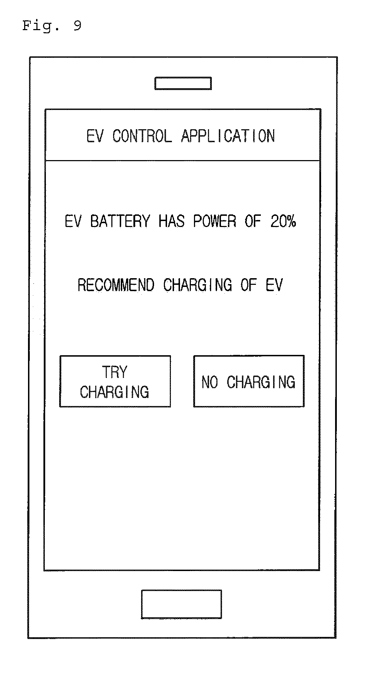

Upon the receipt of the EV charging recommendation message, the UTD 500 displays that the charging of the EV 100 is necessary in operation S102. Referring to Fig. 9, a screen displayed at this point is described.

Fig. 9 is a view illustrating a screen displayed on an UTD according to another embodiment of the present invention.

As shown in Fig. 9, upon the receipt of the EV charging recommendation message, the UTD 500 may display that the charging of the EV 100 is necessary and the reason for this. Additionally, the UTD 500 may display an accept button for accepting the charging recommendation of the EV 100 and a reject button for rejecting the charging recommendation of the EV 100.

When the reject button is selected, the UTD 500 transmits a charging recommendation rejection message to the HCCS 300 and a procedure for charging the EV 100 stops.

When the accept button is selected, the UTD 500 transmits a charging acceptance message to the HCCS 300 and a procedure for charging the EV 100 continues.

Again, Fig. 7 is described.

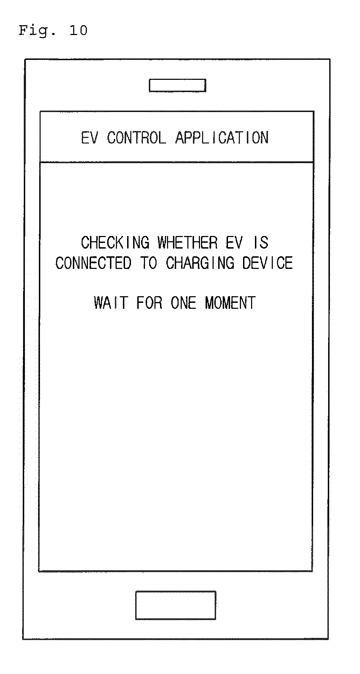

When the charging of the EV 100 is accepted by a user, the UTD 500 transmits an EV charging acceptance message to the HCCS 300 in operation S103 and as shown in Fig. 10, displays a standby screen.

Fig. 10 is a view illustrating a screen displayed on an UTD according to another embodiment of the present invention.

As shown in Fig. 10, after transmitting the EV charging acceptance message to the HCCS 300, the UTD 500 may display a standby screen including a messages such as "checking that the EV 100 is connected to the EVSE 200" and "wait for one moment".

Again, Fig. 7 is described.

Upon the receipt of the EV charging acceptance message from the UTD 500, the HCCS 300 transmits an EV connection confirmation request message to the EVSE 200 to query whether the EV 100 is connected to the EVSE 200 in operation S105.

Upon the receipt of the EV connection confirmation request message, the EVSE 200 checks whether the EV 100 is connected to the EVSE 200 and transmits an EV connection confirmation result message including information on an EV connection confirmation result to the HCCS 300 in operation S107. At this point, the EV connection confirmation result may include information on whether the EV 100 is connected to the EVSE 200.

Upon the receipt of the EV connection confirmation result message from the EVSE 200, the HCCS 300 transmits an EV charging query message to the UTD 500 in operation S109. The EV charging query message may include information on whether the EV 100 is connected to the EVSE 200.

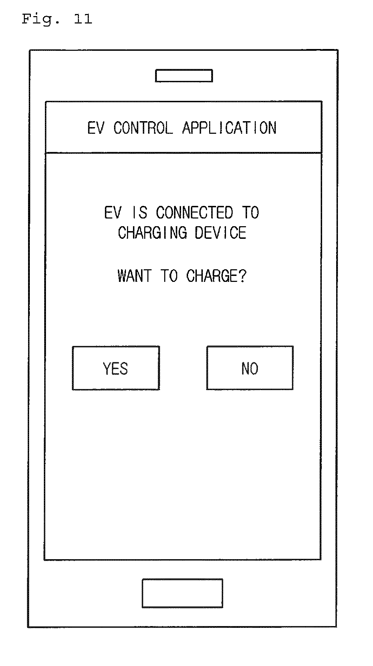

Upon the receipt of then EV charging query message from the HCCS 300, the UTD 500 displays to a user a screen for querying whether to proceed to charge the EV 100 in operation S110. Referring to Fig. 11, a screen displayed at this point is described.

Fig. 11 is a view illustrating a screen displayed on an UTD according to another embodiment of the present invention.

As shown in Fig. 11, upon the receipt of the EV charging query message, the UTD 500 may display information on whether the EV 100 is connected to the EVSE 200 to a user in addition to the content for querying whether to proceed to charge the EV 100. Additionally, the UTD 500 may display a confirm button for confirming EV charging and a reject button for rejecting EV charging.

When the reject button is selected, the UTD 500 transmits a charging rejection message to the HCCS 300 and a procedure for charging the EV 100 stops.

When the confirm button is selected, the UTD 500 transmits a charging confirmation message to the HCCS 300 and a procedure for charging the EV 100 continues.

Again, Fig. 7 is described.

When the charging of the EV 100 is accepted by a user, the UTD 500 transmits an EV charging confirmation message to the HCCS 300 in operation S111.

Upon the receipt of the EV charging confirmation message, the HCCS 300 transmits an EV battery information request message to the EVSE 200 in operation S113.

Upon the receipt of the EV battery information request message from the HCCS 300, the EVSE 200 collects information on the battery 140 of the EV 100 in operation S115. The EVSE 200 may collect information on the battery 140 of the EV 100 by checking it through the charging/discharging point 150. The EVSE 200 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

The EVSE 200 transmits an EV battery information response message to the HCCS 300 in operation S118. At this point, the EV battery information response message may include information on the battery 140 of the EV 100.

Moreover, the HCCS 300 transmits an HPS battery information request message to the HPS 400 in operation S119.

Upon the receipt of the HPS battery information request message from the HCCS 300, the HPS 400 checks the battery 440 and transmits an HPS battery information response message including information on the battery 440 to the HCCS 300 in operation S121. At this point, the information on the battery 440 of the HPS 400 may include part or all of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the HCCS 300 transmits a power policy request message to the power supply facility 600 in operation S123.

Upon the receipt of the power policy request message from the HCCS 300, the power supply facility 600 transmits a power policy response message including information on a power policy to the HCCS 300 in operation S125. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The HCCS 300 determines the best available option by using the collected information in operation S127. At this point, the collected information may include at least one of information on the battery 140 of the EV 100, information on the battery 440 of the HPS 400, and information on a power policy.

At this point, since an electric power sink is defined as the EV 100, the best available option may include a best electric power source, a best charging time slot, and a best charging amount.

The HCCS 300 may determine one of the HPS 400 and the power supply facility 600 as the best electric power source.

As described below, the HCCS 300 may determine a best electric power source, a best charging time slot, and a best charging amount in operation S923 and operation S1135.

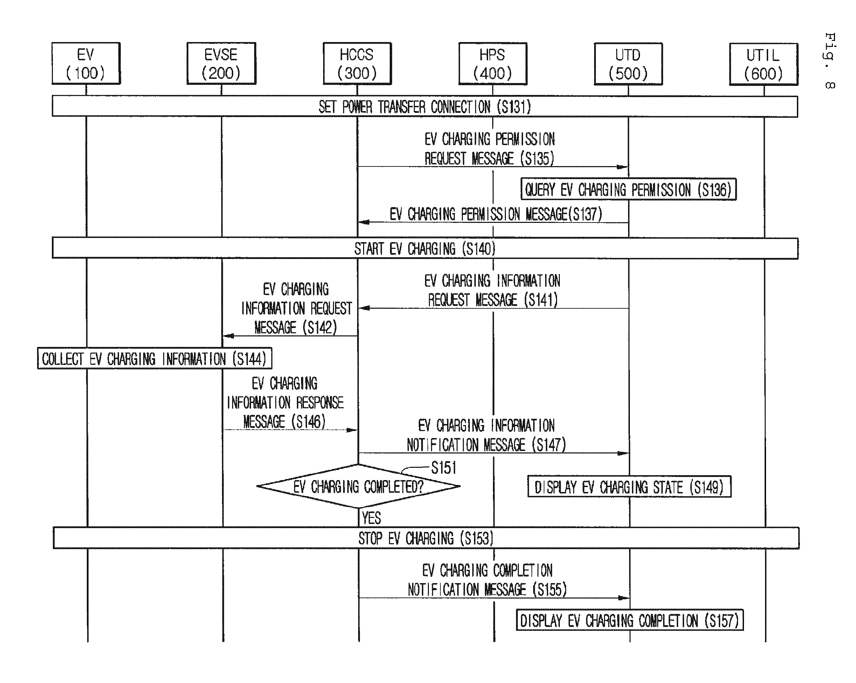

Then, a method of charging the EV 100 according to an embodiment of the present invention will be described with reference to Fig. 8.

Fig. 8 is the rear part of a ladder diagram illustrating a charging method of an EV according to an embodiment of the present invention.

The HCCS 300 sets a power transfer connection between the EV 100 and a power source in operation S131. If the power source is the HPS 400, the HCCS 300 may transmit a connection setting control message to the EV 100, the EVSE 200, and the HPS 400 and may then set a connection between the EV 100 and the HPS 400. If the power source is the power supply facility 600, the HCCS 300 may transmit a connection setting control message to the EV 100, the EVSE 200, and the power supply facility 600 and may then set a connection between the EV 100 and the power supply facility 600. At this point, the connection setting control message may include information on the above-mentioned best available option.

If a connection is set between the EV 100 and the power source, the HCCS 300 transmits a charging permission request message to the UTD 500 and then requests a charging permission from the UTD 500 in operation S135. At this point, the charging permission request message may include part or all of information on the battery 140 of the EV 100, information on the battery 440 of the HPS 400, information on a power policy of the power supply facility 600, information on a determined power source, and information on whether the EV 100 is successfully connected to the power source.

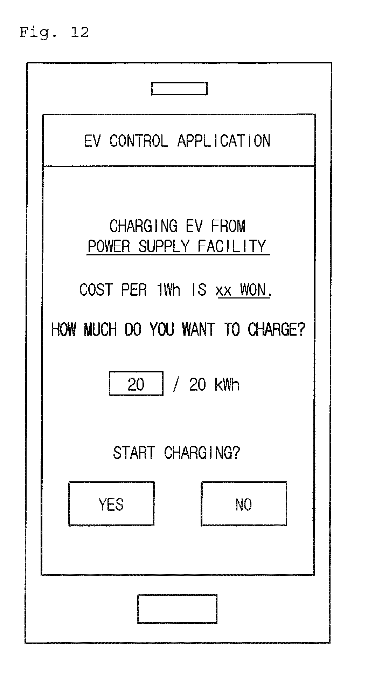

Upon the receipt of the charging permission request message from the HCCS 300, the UTD 500 displays a screen for requesting a charging permission to a user in operation S136. Referring to Fig. 12, a screen displayed at this point is described.

Fig. 12 is a view illustrating a screen displayed on an UTD according to another embodiment of the present invention.

Upon the receipt of then EV charging permission message, the UTD 500 displays a screen as shown in Fig. 12. At this point, the screen may include information on a determined power source, charging costs, contents for querying how much power is charged to the EV 100, and contents for querying a user so as to determine whether to permit the charging of the EV 100. Additionally, the UTD 500 may display an accept button for permitting EV charging and a reject button for rejecting EV charging.

When the reject button is selected, the UTD 500 transmits a charging rejection message to the HCCS 300 and a procedure for charging the EV 100 stops.

When the confirm button is selected, the UTD 500 transmits a charging permission message to the HCCS 300 and a procedure for charging the EV 100 continues.

When the charging of the EV 100 is accepted by a user, the UTD 500 transmits the charging permission message to the HCCS 300 in operation S137. At this point, the charging permission message may include information on how much power is charged to the EV 100.

Upon the receipt of the charging permission message from the UTD 500, the HCCS 300 controls starting the charging of the EV 100 according to a permitted charging amount in the charging permission message in operation S140. If the power source is the HPS 400, the HCCS 300 may transmit a charging start control message to part or all of the EV 100, the EVSE 200, and the HPS 400 and may then allow the EV 100 to be charged by using the power of the HPS 400. If the power source is the power supply facility 600, the HCCS 300 may transmit a charging start control message to part or all of the EV 100, the EVSE 200, and the power supply facility 600 and may then allow the EV 100 to be charged by using the power of the power supply facility 600. At this point, the charging start control message may include part or all of information on the above-mentioned best available option and information on a charging amount in the charging permission message.

During the charging of the EV 100, the UTD 500 may transmit a charging information request message to the HCCS 300 in operation S141.

In response to the charging information request message of the UTD 500, or periodically, or in response to satisfaction of other conditions, the HCCS 300 transmits an EV charging information request message to the EVSE 200 to request information on the charging of the EV 100 from the EVSE 200 in operation S142.

In response to the EV charging information request message of the HCCS 300, or periodically, or in response to satisfaction of other conditions, the EVSE 200 collects charging information on the battery 140 of the EV 100 in operation S144. The EVSE 200 may collect charging information on the battery 140 of the EV 100 by checking it through the charging/discharging point 150. The EVSE 200 may collect charging information on the battery 140 of the EV 100 through the measurement device 120 such as an EUMD. At this point, the charging information may include part or all of an initial SOC, a current SOC, a charge start time, an estimated charge end time, an actual charge end time, and an EV charging status. The initial SOC represents a charging degree at an initial charging of the battery 140 of the EV 100. The current SOC represents a charging degree of the battery 140 of the EV 100. The EV charging status may represent charging in progress or charging completion.

In response to the charging information request message of the HCCS 300, in correspondence to the reception of the charging information response message, or periodically, or in correspondence to satisfaction of other conditions, the EVSE 200 transmits a charging information response message to the HCCS 300 in operation S146. The charging information response message may include information on the charging of the EV 100. At this point, the charging information may include part or all of an initial SOC, a current SOC, a charge start time, an estimated charge end time, an actual charge end time, and an EV charging status.

The EVSE 200 may collect charging information by itself without transmitting a charging information request message to the EV 100.

In response to the charging information request message of the UTD 500, in correspondence to the reception of the charging information response message of the EVSE 200, or periodically, or in correspondence to satisfaction of other conditions, the HCCS 300 transmits a charging information notification message to the UTD 500 in operation S147. The charging information notification message may include information on the charging of the EV 100 and information on a permitted charging amount. At this point, the charging information may include part or all of an initial SOC, a current SOC, a charge start time, an estimated charge end time, an actual charge end time, and an EV charging status. At this point, the EV charging status may represent charging in progress.

Upon the receipt of the charging information notification message, the UTD 500 displays charging information in operation S149.

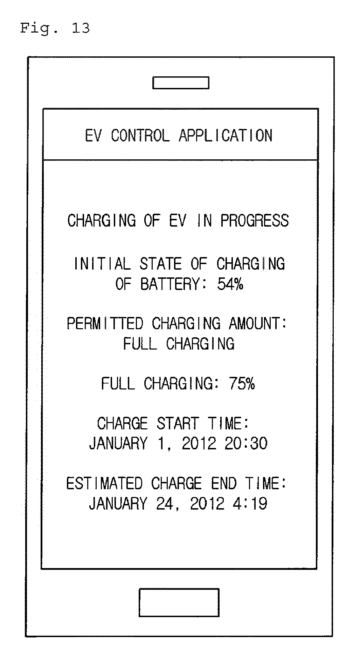

Fig. 13 is a view illustrating a screen displayed on an UTD according to another embodiment of the present invention.

As shown in Fig. 13, the UTD 500 may display an initial SOC, a permitted charging amount, a current SOC, a charge start time, and an estimated charge end time.

Moreover, the HCCS 300 checks whether charging is completed on the basis of a charging information response message in operation S151. The HCCS 300 may determine whether the charging of the EV 100 is completed on the basis of a current SOC, an actual charge end time, an estimated charge end time, and an EV charging status.

When the charging is completed, the HCCS 300 controls stopping the charging of the EV 100 in operation S153. If the power source is the HPS 400, the HCCS 300 may transmit a charging stop control message to part or all of the EV 100, the EVSE 200, and the HPS 400 and may stop the charging of the EV 100. If the power source is the power supply facility 600, the HCCS 300 may transmit a charging stop control message to part or all of the EV 100, the EVSE 200, and the power supply facility 600 and may stop the charging of the EV 100.

Or, when the charging is completed, the HCCS 300 transmits a charging completion notification message to the UTD 500 in operation S155. The charging completion notification message may include information on the charging of the EV 100 and information on a permitted EV charging amount. At this point, the charging information may include part or all of an initial SOC, a current SOC, a charge start time, an estimated charge end time, an actual charge end time, and an EV charging status. At this point, the EV charging status may represent charging completion.

Upon the receipt of the charging completion notification message, the UTD 500 displays charging completion as shown in Fig. 12 in operation S157.

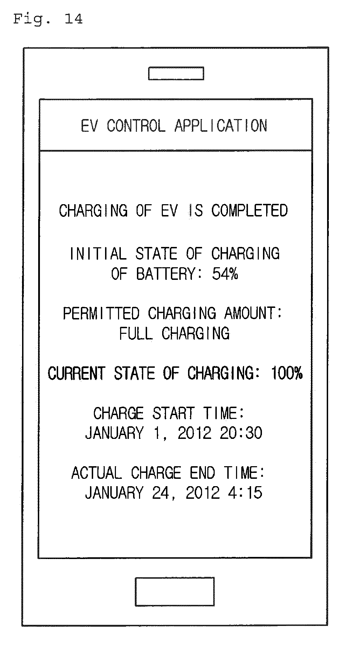

Fig. 14 is a view illustrating a screen displayed on an UTD according to another embodiment of the present invention.

Upon the receipt of then EV charging completion notification message, as shown in Fig. 14, the UTD 500 may display an EV charging status notifying that the charging of the EV 100 is completed, an initial SOC, a permitted charging amount, a current SOC, a charge start time, and an actual charge end time.

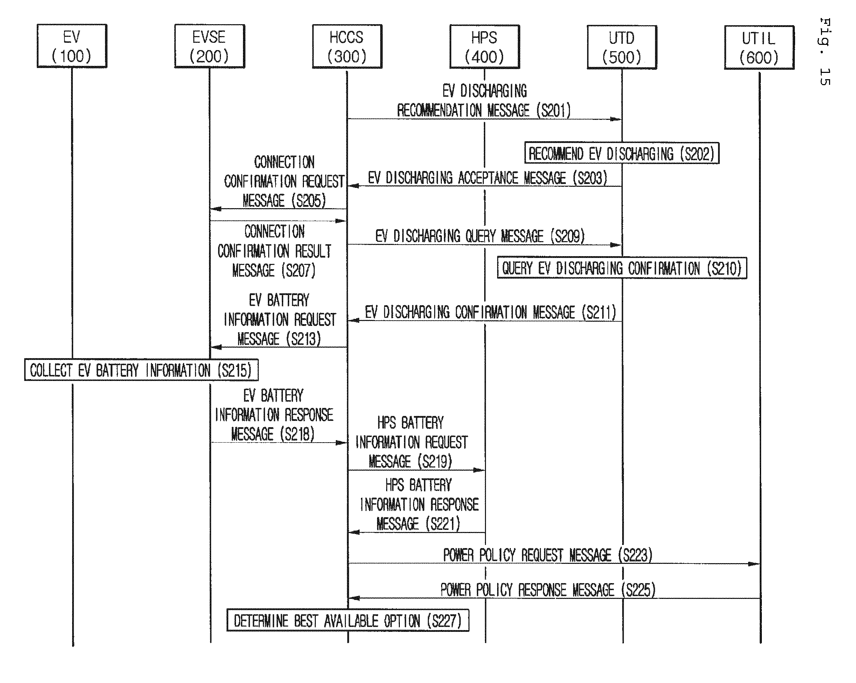

Then, a method of discharging an EV according to an embodiment of the present invention will be described with reference to Figs. 15 to 21.

Fig. 15 is the front part of a ladder diagram illustrating a discharging method of an EV according to an embodiment of the present invention.

If detecting the discharging of the EV 100 is necessary, the HCCS 300 transmits an EV discharging recommendation message to the UTD 500 in operation S201. At this point, the EV discharging recommendation message may include information on the reason that the discharging of the EV 100 is necessary.

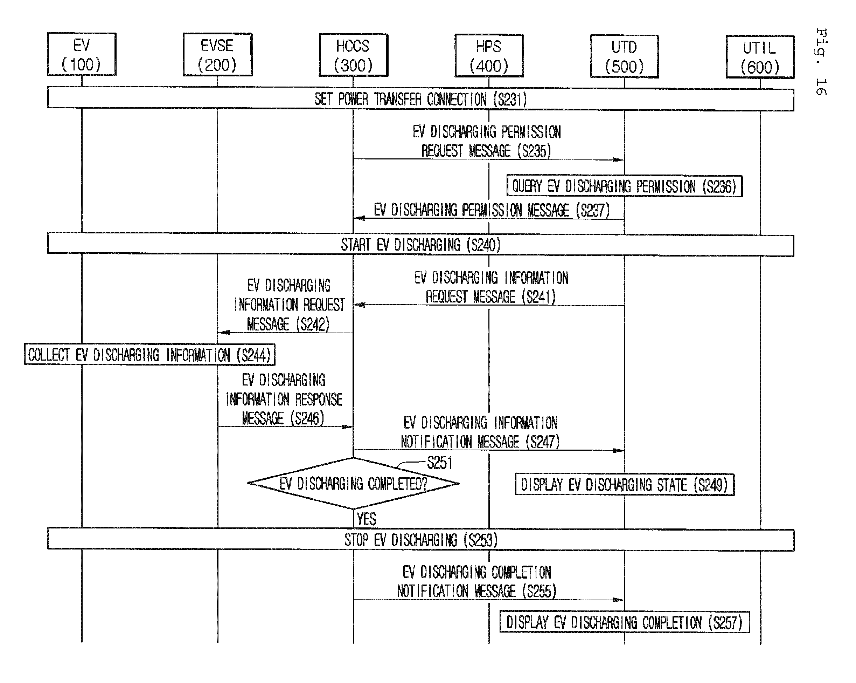

Upon the receipt of the EV discharging recommendation message, the UTD 500 displays that the discharging of the EV 100 is necessary in operation S202. Referring to Fig. 16, a screen displayed at this point is described.

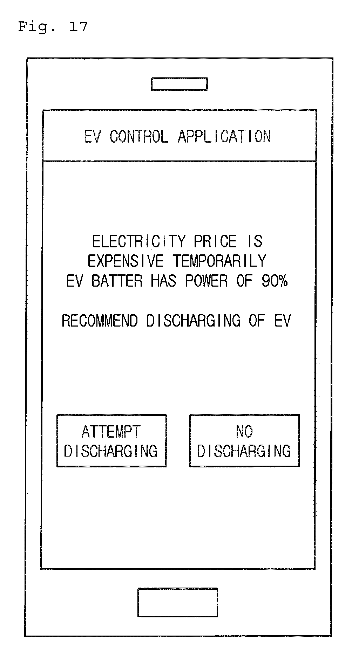

Fig. 17 is a view illustrating a screen displayed on an UTD according to another embodiment of the present invention.

As shown in Fig. 17, upon the receipt of the EV discharging recommendation message, the UTD 500 may display that the discharging of the EV 100 is necessary and the reason for this. Additionally, the UTD 500 may display an accept button for accepting an EV discharging recommendation and a reject button for rejecting an EV discharging recommendation.

When the reject button is selected, the UTD 500 transmits a discharging recommendation rejection message to the HCCS 300 and a procedure for discharging the EV 100 stops.

When the accept button is selected, the UTD 500 transmits a discharging acceptance message to the HCCS 300 and a procedure for discharging the EV 100 continues.

Again, Fig. 15 is described.

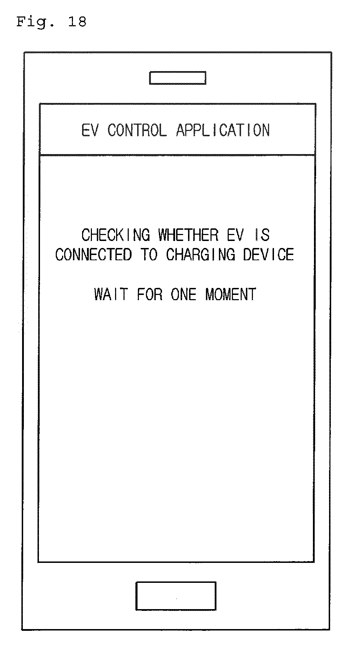

When the discharging of the EV 100 is accepted by a user, the UTD 500 transmits an EV discharging acceptance message to the HCCS 300 in operation S203 and as shown in Fig. 18, displays a standby screen.

Fig. 18 is a view illustrating a screen displayed on an UTD according to another embodiment of the present invention.

As shown in Fig. 18, after transmitting the EV discharging acceptance message to the HCCS 300, the UTD 500 may display a standby screen including a messages such as "checking that the EV 100 is connected to the EVSE 200" and "wait for one moment".

Again, Fig. 15 is described.

Upon the receipt of the EV discharging acceptance message from the UTD 500, the HCCS 300 transmits an EV connection confirmation request message to the EVSE 200 to query whether the EV 100 is connected to the EVSE 200 in operation S205.

Upon the receipt of the EV connection confirmation request message, the EVSE 200 checks whether the EV 100 is connected to the EVSE 200 and transmits an EV connection confirmation result message including information on an EV connection confirmation result to the HCCS 300 in operation S207. At this point, the EV connection confirmation result may include information on whether the EV 100 is connected to the EVSE 200.

Upon the receipt of the EV connection confirmation result message from the EVSE 200, the HCCS 300 transmits an EV discharging query message to the UTD 500 in operation S209. The EV discharging query message may include information on whether the EV 100 is connected to the EVSE 200.

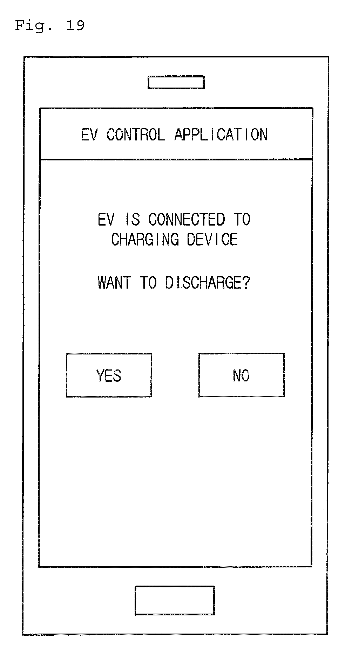

Upon the receipt of then EV discharging query message from the HCCS 300, the UTD 500 displays to a user a screen for querying whether to proceed to discharge the EV 100 in operation S210. Referring to Fig. 19, a screen displayed at this point is described.

Fig. 19 is a view illustrating a screen displayed on an UTD according to another embodiment of the present invention.

As shown in Fig. 19, upon the receipt of the EV discharging query message, the UTD 500 may display information on whether the EV 100 is connected to the EVSE 200 to a user in addition to the content for querying whether to proceed to discharge the EV 100. Additionally, the UTD 500 may display an accept button for confirming EV discharging and a reject button for rejecting EV discharging.

When the reject button is selected, the UTD 500 transmits a discharging recommendation rejection message to the HCCS 300 and a procedure for discharging the EV 100 stops.

When the accept button is selected, the UTD 500 transmits a discharging acceptance message to the HCCS 300 and a procedure for discharging the EV 100 continues.

Again, Fig. 15 is described.

When the discharging of the EV 100 is accepted by a user, the UTD 500 transmits an EV discharging confirmation message to the HCCS 300 in operation S211.

Upon the receipt of the EV discharging confirmation message, the HCCS 300 transmits an EV battery information request message to the EVSE 200 in operation S213.

Upon the receipt of the EV battery information request message from the HCCS 300, the EVSE 200 collects information on the battery 140 of the EV 100 in operation S215. The EVSE 200 may collect information on the battery 140 of the EV 100 by checking it through the charging/discharging point 150. The EVSE 200 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

The EVSE 200 transmits an EV battery information response message to the HCCS 300 in operation S218. At this point, the EV battery information response message may include information on the battery 140 of the EV 100.

Moreover, the HCCS 300 transmits an HPS battery information request message to the HPS 400 in operation S219.

Upon the receipt of the HPS battery information request message from the HCCS 300, the HPS 400 checks the battery 440 and transmits an HPS battery information response message including information on the battery 440 to the HCCS 300 in operation S221. At this point, the information on the battery 440 of the HPS 400 may include part or all of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the HCCS 300 transmits a power policy request message to the power supply facility 600 in operation S223.

Upon the receipt of the power policy request message from the HCCS 300, the power supply facility 600 transmits a power policy response message including information on a power policy to the HCCS 300 in operation S225. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The HCCS 300 determines the best available option by using the collected information in operation S227. At this point, the collected information may include at least one of information on the battery 140 of the EV 100, information on the battery 440 of the HPS 400, and information on a power policy.

At this point, since an electric power sink is defined as the EV 100, the best available option may include a best electric power sink, a best discharging time slot, and a best discharging amount.

The HCCS 300 may determine one of the HPS 400 and the power supply facility 600 as the best electric power sink.

As described below, the HCCS 300 may determine a best electric power sink, a best discharging time slot, and a best discharging amount in operation S923 and operation S1135.

Then, a discharging method of an EV according to an embodiment of the present invention will be described with reference to Fig. 16.

Fig. 16 is the rear part of a ladder diagram illustrating a discharging method of an EV according to an embodiment of the present invention.

The HCCS 300 sets a power transfer connection between the EV 100 and a power sink in operation S231. If the sink source is the HPS 400, the HCCS 300 may transmit a connection setting control message to the EV 100, the EVSE 200, and the HPS 400 and may then set a connection between the EV 100 and the HPS 400. If the power sink is the power supply facility 600, the HCCS 300 may transmit a connection setting control message to the EV 100, the EVSE 200, and the power supply facility 600 and may then set a connection between the EV 100 and the power supply facility 600. At this point, the connection setting control message may include information on the above-mentioned best available option.

If a connection is set between the EV 100 and the power sink, the HCCS 300 transmits a discharging permission request message to the UTD 500 and then requests a discharging permission from the UTD 500 in operation S235. At this point, the discharging permission request message may include at least one of information on the battery 140 of the EV 100, information on the battery 440 of the HPS 400, information on a power policy of the power supply facility 600, information on a determined power sink, and information on whether the EV 100 is successfully connected to the power sink.

Upon the receipt of the discharging permission request message from the HCCS 300, the UTD 500 displays a screen for requesting a discharging permission to a user in operation S236. Referring to Fig. 19, a screen displayed at this point is described.

Fig. 19 is a view illustrating a screen displayed on an UTD according to another embodiment of the present invention.

Upon the receipt of then EV discharging permission message, the UTD 500 displays a screen as shown in Fig. 19. At this point, the screen may include information on a determined power sink, discharging costs, contents for querying how much power is discharged from the EV 100, and contents for querying a user so as to determine whether to permit the discharging of the EV 100. Additionally, the UTD 500 may display an accept button for permitting EV discharging and a reject button for rejecting EV discharging.

When the reject button is selected, the UTD 500 transmits a discharging recommendation rejection message to the HCCS 300 and a procedure for discharging the EV 100 stops.

When the accept button is selected, the UTD 500 transmits a discharging permission message to the HCCS 300 and a procedure for discharging the EV 100 continues.

When the discharging of the EV 100 is permitted by a user, the UTD 500 transmits the discharging permission message to the HCCS 300 in operation S237. At this point, the discharging permission message may include discharging amount information on how much power is discharged from the EV 100.

Upon the receipt of the discharging permission message from the UTD 500, the HCCS 300 controls starting the discharging of the EV 100 according to a permitted discharging amount in the discharging permission message in operation S240. If the power sink is the HPS 400, the HCCS 300 may transmit a discharging start control message to part or all of the EV 100, the EVSE 200, and the HPS 400 and may start the discharging of the EV 100. If the power sink is the power supply facility 600, the HCCS 300 may transmit a discharging start control message to part or all of the EV 100, the EVSE 200, and the power supply facility 600 and may start the discharging of the EV 100. At this point, the discharging start control message may include part or all of information on the above-mentioned best available option and information on a discharging amount in the discharging permission message.

During the discharging of the EV 100, the UTD 500 may transmit a discharging information request message to the HCCS 300 in operation S241.

In response to the discharging information request message of the UTD 500, or periodically, or in response to satisfaction of other conditions, the HCCS 300 transmits an EV discharging information request message to the EVSE 200 to request information on the discharging of the EV 100 from the EVSE 200 in operation S242.

In response to the EV discharging information request message of the HCCS 300, or periodically, or in response to satisfaction of other conditions, the EVSE 200 collects discharging information on the battery 140 of the EV 100 in operation S244. The EVSE 200 may collect discharging information on the battery 140 of the EV 100 by checking it through the charging/discharging point 150. The EVSE 200 may collect discharging information on the battery 140 of the EV 100 through the measurement device 120 such as an EUMD. At this point, the discharging information may include part or all of an initial SOC, a current SOC, a discharge start time, an estimated discharge end time, an actual discharge end time, and an EV discharging status. The EV discharging status may represent discharging in progress or discharging completion.

In response to the discharging information request message of the HCCS 300, in correspondence to the reception of the discharging information response message, or periodically, or in response to satisfaction of other conditions, the EVSE 200 transmits a discharging information response message to the HCCS 300 in operation S246. The discharging information response message may include information on the discharging of the EV 100. At this point, the discharging information may include an initial SOC, a current SOC, a discharge start time, an estimated discharge end time, an actual discharge end time, and an EV discharging status.

In response to the discharging information request message of the UTD 500, in correspondence to the reception of the discharging information response message of the EVSE 200, or periodically, or in correspondence to satisfaction of other conditions, the HCCS 300 transmits a discharging information notification message to the UTD 500 in operation S247. The discharging information notification message may include part or all of information on the discharging of the EV 100 and information on a permitted discharging amount. At this point, the discharging information may include an initial SOC, a current SOC, a discharge start time, an estimated discharge end time, an actual discharge end time, and an EV discharging status. At this point, the EV discharging status may represent discharging in progress.

Upon the receipt of the discharging information notification message, the UTD 500 displays discharging information in operation S249.

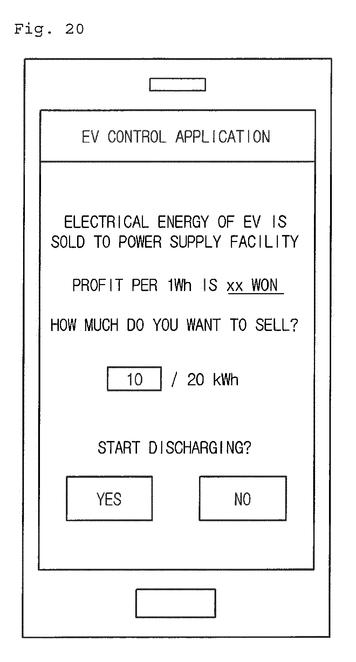

Fig. 20 is a view illustrating a screen displayed on an UTD according to another embodiment of the present invention.

As shown in Fig. 20, the UTD 500 may display an EV discharging status notifying that the discharging of the EV 100 is in progress, an initial SOC, a permitted discharging amount, a current SOC, a discharge start time, and an estimated discharge end time.

Moreover, the HCCS 300 checks whether discharging is completed on the basis of a discharging information response message in operation S251. The HCCS 300 may determine whether the discharging of the EV 100 is completed on the basis of a current SOC, an actual charge end time, an estimated charge end time, and an EV charging status.

When the discharging is completed, the HCCS 300 controls stopping the discharging of the EV 100 in operation S253. If the power sink is the HPS 400, the HCCS 300 may transmit a discharging stop control message to part or all of the EV 100, the EVSE 200, and the HPS 400 and may stop the discharging of the EV 100. If the power source is the power supply facility 600, the HCCS 300 may transmit a discharging stop control message to part or all of the EV 100, the EVSE 200, and the power supply facility 600 and may stop the discharging of the EV 100.

Or, when the discharging is completed, the HCCS 300 transmits a discharging completion notification message to the UTD 500 in operation S255. The discharging completion notification message may include information on the discharging of the EV 100 and information on a permitted discharging amount. At this point, the discharging information may include part or all of an initial SOC, a current SOC, a discharge start time, an estimated discharge end time, an actual discharge end time, and an EV discharging status. At this point, the EV discharging status may represent discharging completion.

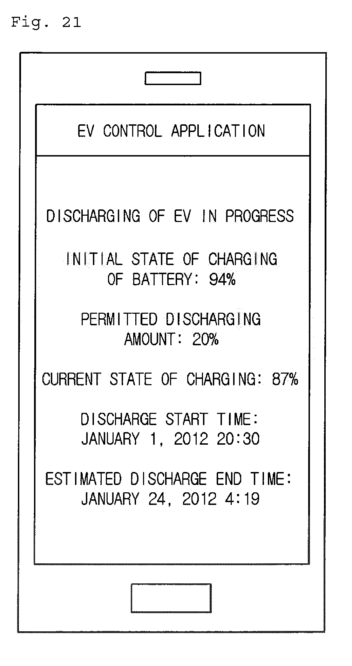

Upon the receipt of the discharging completion notification message, the UTD 500 displays discharging completion as shown in Fig. 21 in operation S257.

Fig. 21 is a view illustrating a screen displayed on an UTD according to another embodiment of the present invention.

Upon the receipt of then EV charging completion notification message, as shown in Fig. 21, the UTD 500 may display an EV discharging status notifying that the discharging of the EV 100 is in progress, an initial SOC, a permitted discharging amount, a current SOC, a discharge start time, and an actual discharge end time.

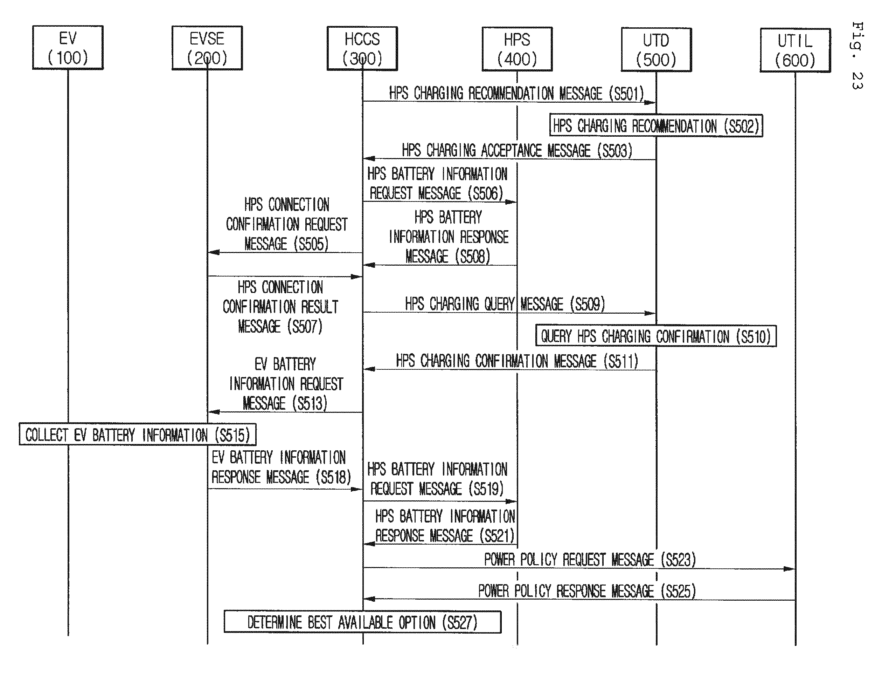

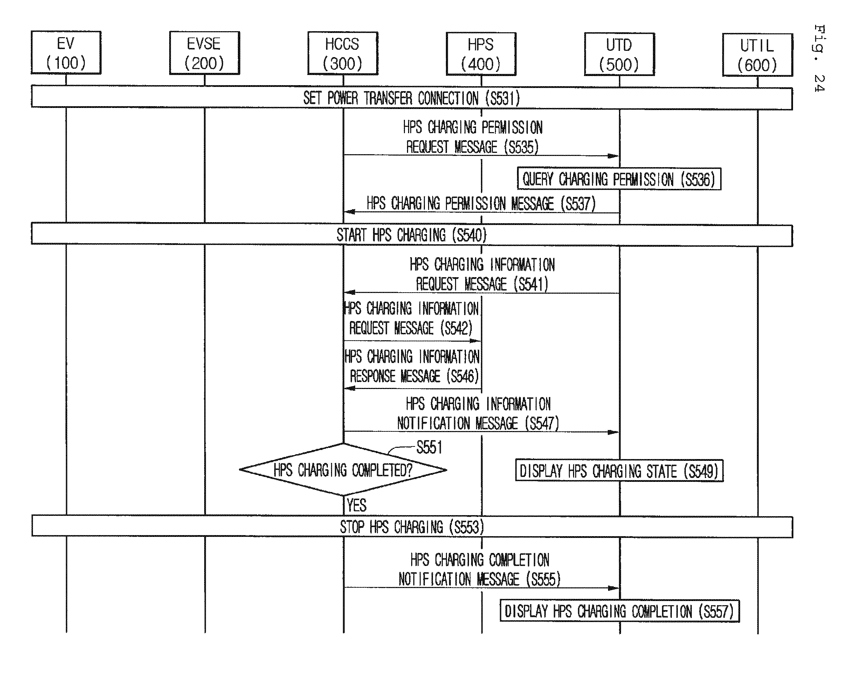

Then, a charging method of an HPS according to an embodiment of the present invention will be described with reference to Figs. 23 and 24.

Fig. 23 is the first part of a ladder diagram illustrating a charging method of an HPS according to an embodiment of the present invention.

If detecting the charging of the HPS 400 is necessary, the HCCS 300 transmits an HPS charging recommendation message to the UTD 500 in operation S501. At this point, the HPS charging recommendation message may include information on the reason that the charging of the HPS 400 is necessary.

Upon the receipt of the HPS charging recommendation message, the UTD 500 displays that the charging of the HPS 400 is necessary in operation S502. At this point, a screen similar to Fig. 9 may be displayed. That is, upon the receipt of the HPS charging recommendation message, the UTD 500 displays that the charging of the HPS 400 is necessary and the reason for that. Additionally, the UTD 500 may display an accept button for accepting the HPS charging recommendation and a reject button for rejecting the HPS charging recommendation.

When the reject button is selected, the UTD 500 transmits an HPS charging recommendation rejection message to the HCCS 300 and a procedure for charging the HPS 400 stops.

When the accept button is selected, the UTD 500 transmits an HPS charging acceptance message to the HCCS 300 and a procedure for charging the HPS 400 continues.

When the charging of the HPS 400 is accepted by a user, the UTD 500 transmits the HPS charging acceptance message to the HCCS 300 in operation S503.

Upon the receipt of the HPS charging acceptance message from the UTD 500, the HCCS 300 transmits an EV connection confirmation request message to the EVSE 200 to query whether the EV 100 is connected to the EVSE 200 in operation S505.

Upon the receipt of the EV connection confirmation request message, the EVSE 200 checks whether the EV 100 is connected to the EVSE 200 and transmits an EV connection confirmation result message including information on an EV connection confirmation result to the HCCS 300 in operation S507. At this point, the EV connection confirmation result may include information on whether the EV 100 is connected to the EVSE 200.

Moreover, the HCCS 300 transmits an HPS battery information request message to the HPS 400 in operation S506.

Upon the receipt of the HPS battery information request message from the HCCS 300, the HPS 400 checks the battery 440 and transmits an HPS battery information response message including information on the battery 440 to the HCCS 300 in operation S508. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

When the current SOC of the battery 440 of the HPS 400 is less than a reference value, the HCCS 300 transmits an HPS charging query message to the UTD 500 in operation S509. The HPS charging query message may include information describing that the current SOC of the battery 440 of the HPS 400 is less than the reference value.

Upon the receipt of then HPS charging query message from the HCCS 300, the UTD 500 displays to a user a screen for querying whether to proceed to charge the EV 100 in operation S510. Upon the receipt of the HPS charging query message, the UTD 500 may display information describing that the current SOC of the battery 440 of the HPS 400 is less than the reference value in addition to a content for querying whether to proceed to charge the HPS 400. Additionally, the UTD 500 may display a confirm button for confirming HPS charging and a reject button for rejecting HPS charging.

When the reject button is selected, the UTD 500 transmits an HPS charging rejection message to the HCCS 300 and a procedure for charging the HPS 400 stops.

When the accept button is selected, the UTD 500 transmits an HPS charging confirmation message to the HCCS 300 and a procedure for charging the HPS 400 continues.

When the charging of the HPS 400 is accepted by a user, the UTD 500 transmits an HPS charging confirmation message to the HCCS 300 in operation S511.

Upon the receipt of the HPS charging confirmation message, the HCCS 300 transmits an EV battery information request message to the EVSE 200 in operation S513.

Upon the receipt of the EV battery information request message from the HCCS 300, the EVSE 200 collects information on the battery 140 of the EV 100 in operation S515. The EVSE 200 may collect information on the battery 140 of the EV 100 by checking it through the charging/discharging point 150. The EVSE 200 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

The EVSE 200 transmits an EV battery information response message to the HCCS 300 in operation S518. At this point, the EV battery information response message may include information on the battery 140 of the EV 100.

Moreover, the HCCS 300 transmits an HPS battery information request message to the HPS 400 in operation S519.

Upon the receipt of the HPS battery information request message from the HCCS 300, the HPS 400 checks the battery 440 and transmits an HPS battery information response message including information on the battery 440 to the HCCS 300 in operation S521. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the HCCS 300 transmits a power policy request message to the power supply facility 600 in operation S523.

Upon the receipt of the power policy request message from the HCCS 300, the power supply facility 600 transmits a power policy response message including information on a power policy to the HCCS 300 in operation S525. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The HCCS 300 determines the best available option by using the collected information in operation S527. At this point, the collected information may include at least one of information on the battery 140 of the EV 100, information on the battery 440 of the HPS 400, and information on a power policy.

At this point, since an electric power sink is defined as the HPS 400, the best available option may include a best electric power source, a best charging time slot, and a best charging amount.

The HCCS 300 may determine one of the EV 100 and the power supply facility 600 as the best electric power source.

As described below, the HCCS 300 may determine a best electric power source, a best charging time slot, and a best charging amount in operation S923 and operation S1135.

Then, a charging method of an HPS according to an embodiment of the present invention will be described with reference to Fig. 24.

Fig. 24 is the rear part of a ladder diagram illustrating a charging method of an HPS according to an embodiment of the present invention.

The HCCS 300 sets a power transfer connection between the HPS 400 and a power source in operation S531. If the power source is the EV 100, the HCCS 300 may transmit a connection setting control message to the EV 100, the EVSE 200, and the HPS 400 and may then set a connection between the EV 100 and the HPS 400. If the power source is the power supply facility 600, the HCCS 300 may transmit a connection setting control message to the HPS 400 and the power supply facility 600 and may then set a connection between the HPS 400 and the power supply facility 600. At this point, the connection setting control message may include information on the above-mentioned best available option.

If a connection is set between the HPS 400 and the power source, the HCCS 300 transmits a charging permission request message to the UTD 500 and then requests a charging permission from the UTD 500 in operation S535. At this point, the HPS charging permission request message may include part or all of information on the battery 140 of the EV 100, information on the battery 440 of the HPS 400, information on a power policy of the power supply facility 600, information on a determined power source, and information on whether the HPS 400 is successfully connected to the power source.

Upon the receipt of the HPS charging permission request message from the HCCS 300, the UTD 500 displays a screen for requesting a charging permission to a user in operation S536. At this point, a screen similar to Fig. 12 may be displayed. That is, the displayed screen may include information on a determined power source, charging costs, contents for querying how much power is charged to the HPS 400, and contents for querying a user so as to determine whether to permit the charging of the HPS 400, Additionally, the UTD 500 may display an accept button for permitting the charging of the HPS 400 and a reject button for rejecting the charging of the HPS 400.

When the reject button is selected, the UTD 500 transmits an HPS charging rejection message to the HCCS 300 and a procedure for charging the HPS 400 stops.

When the accept button is selected, the UTD 500 transmits an HPS charging permission message to the HCCS 300 and a procedure for charging the HPS 400 continues.

When the charging of the HPS 400 is permitted by a user, the UTD 500 transmits the HPS charging permission message to the HCCS 300 in operation S537. At this point, the HPS charging permission message may include information on how much power is charged to the EV 100.

Upon the receipt of the HPS charging permission message from the UTD 500, the HCCS 300 transmits an HPS charging start instruction message to the HPS 400 and instructs starting the charging of the battery 440 of the HPS 400 in operation S539. At this point, the HPS charging start instruction message may include charging amount information on how much power is charged to the HPS 400.

Upon the receipt of the HPS charging permission message from the UTD 500, the HCCS 300 controls starting the charging of the HPS 400 according to a permitted HPS charging amount in the charging permission message in operation S540. If the power source is the EV 100, the HCCS 300 may transmit a charging start control message to part or all of the EV 100, the EVSE 200, and the HPS 400 and may then allow the HPS 400 to be charged by using the power of the HPS 400. If the power source is the power supply facility 600, the HCCS 300 may transmit a charging start control message to part or all of the HPS 400, the EVSE 200, and the power supply facility 600 and may then allow the HPS 400 to be charged by using the power of the power supply facility 600. At this point, the charging start control message may include part or all of information on the above-mentioned best available option and information on a charging amount in the charging permission message.

During the charging of the EV 100, the UTD 500 may transmit an HPS charging information request message to the HCCS 300 in operation S541.

In response to the HPS charging information request message of the UTD 500, or periodically, or in response to satisfaction of other conditions, the HCCS 300 transmits an HPS charging information request message to the HPS 400 to request information on the charging of the battery 440 of the HPS 400 from the HPS 400 in operation S542.

In response to the HPS charging information request message of the HCCS 300, or periodically, or in response to satisfaction of other conditions, the HPS 400 transmits an HPS charging information response message to the HCCS 300 in operation S546. The HPS charging information response message may include information on the charging of the HPS 400. At this point, the charging information may include part or all of an HPS initial SOC, an HPS current SOC, an HPS charge start time, an HPS estimated charge end time, an HPS actual charge end time, and an HPS charging status. The HPS initial SOC represents a charging degree at an initial charging of the battery 440 of the HPS 400. The HPS current SOC represents a current charging degree of the battery 440 of the HPS 400. The HPS charging status may represent charging in progress or charging completion.

In response to the HPS charging information request message of the UTD 500, in correspondence to the reception of the HPS charging information response message of the HPS 400, or periodically, or in correspondence to satisfaction of other conditions, the HCCS 300 transmits an HPS charging information notification message to the UTD 500 in operation S547. The HPS charging information notification message may include information on the charging of the HPS 400 and information on a permitted HPS charging amount. At this point, the charging information may include part or all of an HPS initial SOC, an HPS current SOC, an HPS charge start time, an HPS estimated charge end time, an HPS actual charge end time, and an HPS charging status. At this point, the HPS charging status may represent HPS charging in progress.

Upon the receipt of then HPS charging information notification message, the UTD 500 displays charging information in operation S549. At this point, the UTD 500 may display a screen similar to Fig. 13. That is, the UTD 500 may display part or all of an HPS charging status, an initial SOC, a permitted HPS charging amount, a current SOC, a charge start time, and an estimated charge end time.

Moreover, the HCCS 300 checks whether charging is completed on the basis of an HPS charging information response message in operation S551. The HCCS 300 may determine whether the discharging of the HPS 400 is completed on the basis of a current SOC, an actual charge end time, an estimated charge end time, and an HPS charging status.

When the charging is completed, the HCCS 300 controls stopping the charging of the HPS 400 in operation S553. If the power source is the EV 100, the HCCS 300 may transmit a charging stop control message to part or all of the EV 100, the EVSE 200, and the HPS 400 and may stop the charging of the HPS 400. If the power source is the power supply facility 600, the HCCS 300 may transmit a charging stop control message to part or all of the HPS 400, the EVSE 200, and the power supply facility 600 and may stop the charging of the HPS 400.

Or, when the charging is completed, the HCCS 300 transmits an HPS charging completion notification message to the UTD 500 in operation S555. The HPS charging completion notification message may include information on the charging of the HPS 400 and information on a permitted HPS charging amount. At this point, the charging information may include part or all of an initial SOC, a current SOC, a charge start time, an estimated charge end time, an actual charge end time, and an HPS charging status. At this point, the HPS charging status may represent charging completion.

Upon the receipt of then HPS charging completion notification message, the UTD 500 displays the charging completion in operation S557. At this point, the UTD 500 may display a screen similar to Fig. 14.

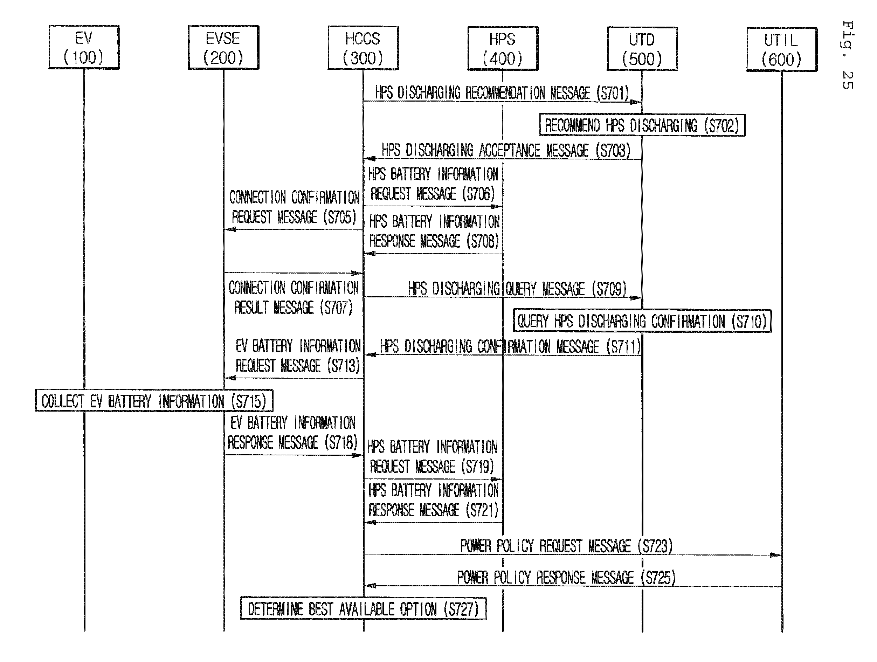

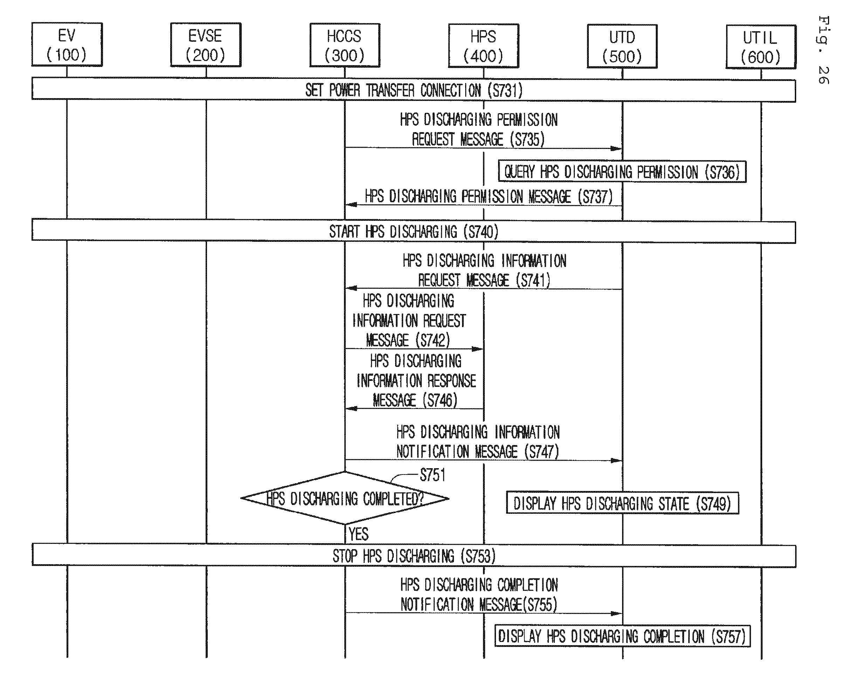

Then, a discharging method of an HPS according to an embodiment of the present invention will be described with reference to Figs. 25 and 26.

Fig. 25 is the front part of a ladder diagram illustrating a discharging method of an HPS according to an embodiment of the present invention.

If detecting the discharging of the HPS 400 is necessary, the HCCS 300 transmits an HPS discharging recommendation message to the UTD 500 in operation S701. At this point, the HPS discharging recommendation message may include information on the reason that the discharging of the HPS 400 is necessary.

Upon the receipt of the HPS discharging recommendation message, the UTD 500 displays that the discharging of the HPS 400 is necessary in operation S702. At this point, a screen similar to Fig. 17 may be displayed. That is, upon the receipt of the HPS discharging recommendation message, the UTD 500 displays that the discharging of the HPS 400 is necessary and the reason for that. Additionally, the UTD 500 may display an accept button for accepting an HPS discharging recommendation and a reject button for rejecting an HPS discharging recommendation.

When the reject button is selected, the UTD 500 transmits an HPS discharging recommendation rejection message to the HCCS 300 and a procedure for discharging the HPS 400 stops.

When the accept button is selected, the UTD 500 transmits an HPS discharging acceptance message to the HCCS 300 and a procedure for discharging the HPS 400 continues.

When the discharging of the HPS 400 is accepted by a user, the UTD 500 transmits the HPS discharging acceptance message to the HCCS 300 in operation S703.

Upon the receipt of the HPS discharging acceptance message from the UTD 500, the HCCS 300 transmits an EV connection confirmation request message to the EVSE 200 to query whether the EV 100 is connected to the EVSE 200 in operation S705.

Upon the receipt of the EV connection confirmation request message, the EVSE 200 checks whether the EV 100 is connected to the EVSE 200 and transmits an EV connection confirmation result message including information on an EV connection confirmation result to the HCCS 300 in operation S707. At this point, the EV connection confirmation result may include information on whether the EV 100 is connected to the EVSE 200.

Moreover, the HCCS 300 transmits an HPS battery information request message to the HPS 400 in operation S706.

Upon the receipt of the HPS battery information request message from the HCCS 300, the HPS 400 checks the battery 440 and transmits an HPS battery information response message including information on the battery 440 to the HCCS 300 in operation S708. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

When the current SOC of the battery 440 of the HPS 400 is greater than a reference value, the HCCS 300 transmits an HPS discharging query message to the UTD 500 in operation S709. The HPS discharging query message may include information describing that the current SOC of the battery 440 of the HPS 400 is greater than the reference value.

Upon the receipt of then HPS discharging query message from the HCCS 300, the UTD 500 displays to a user a screen for querying whether to proceed to discharge the EV 100 in operation S710. Upon the receipt of the HPS discharging query message, the UTD 500 may display information describing that the current SOC of the battery 440 of the HPS 400 is greater than the reference value in addition to a content for querying whether to proceed to discharge the HPS 400. Additionally, the UTD 500 may display an accept button for confirming HPS discharging and a reject button for rejecting HPS discharging.

When the reject button is selected, the UTD 500 transmits an HPS discharging rejection message to the HCCS 300 and a procedure for discharging the HPS 400 stops.

When the accept button is selected, the UTD 500 transmits an HPS discharging confirmation message to the HCCS 300 and a procedure for discharging the HPS 400 continues.

When the discharging of the HPS 400 is accepted by a user, the UTD 500 transmits an HPS discharging confirmation message to the HCCS 300 in operation S711.

Upon the receipt of the HPS discharging confirmation message, the HCCS 300 transmits an EV battery information request message to the EVSE 200 in operation S713.

Upon the receipt of the EV battery information request message from the HCCS 300, the EVSE 200 collects information on the battery 140 of the EV 100 in operation S715. The EVSE 200 may collect information on the battery 140 of the EV 100 by checking it through the charging/discharging point 150. The EVSE 200 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

The EVSE 200 transmits an EV battery information response message to the HCCS 300 in operation S718. At this point, the EV battery information response message may include information on the battery 140 of the EV 100.

Moreover, the HCCS 300 transmits an HPS battery information request message to the HPS 400 in operation S719.

Upon the receipt of the HPS battery information request message from the HCCS 300, the HPS 400 checks the battery 440 and transmits an HPS battery information response message including information on the battery 440 to the HCCS 300 in operation S721. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the HCCS 300 transmits a power policy request message to the power supply facility 600 in operation S723.

Upon the receipt of the power policy request message from the HCCS 300, the power supply facility 600 transmits a power policy response message including information on a power policy to the HCCS 300 in operation S725. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The HCCS 300 determines the best available option by using the collected information in operation S727. At this point, the collected information may include at least one of information on the battery 140 of the EV 100, information on the battery 440 of the HPS 400, and information on a power policy.

At this point, since an electric power sink is defined as the HPS 400, the best available option may include a best electric power sink, a best discharging time slot, and a best discharging amount.

The HCCS 300 may determine one of the EV 100 and the power supply facility 600 as the best electric power sink.

As described below, the HCCS 300 may determine a best electric power sink, a best discharging time slot, and a best discharging amount in operation S923 and operation S1135.

Then, a discharging method of an HPS according to an embodiment of the present invention will be described with reference to Fig. 26.

Fig. 26 is the rear part of a ladder diagram illustrating a discharging method of an HPS according to an embodiment of the present invention.

The HCCS 300 sets a power transfer connection between the HPS 400 and a power source in operation S731. If the power source is the EV 100, the HCCS 300 may transmit a connection setting control message to the EV 100, the EVSE 200, and the HPS 400 and may then set a connection between the EV 100 and the HPS 400. If the power source is the power supply facility 600, the HCCS 300 may transmit a connection setting control message to the HPS 400 and the power supply facility 600 and may then set a connection between the HPS 400 and the power supply facility 600. At this point, the connection setting control message may include information on the above-mentioned best available option.

If a connection is set between the HPS 400 and the power source, the HCCS 300 transmits an HPS discharging permission request message to the UTD 500 and then requests a discharging permission from the UTD 500 in operation S735. At this point, the HPS discharging permission request message may include part or all of information on the battery 140 of the EV 100, information on the battery 440 of the HPS 400, information on a power policy of the power supply facility 600, information on a determined power source, and information on whether the HPS 400 is successfully connected to the power source.

Upon the receipt of the HPS discharging permission request message from the HCCS 300, the UTD 500 displays a screen for requesting a discharging permission to a user in operation S736. At this point, a screen similar to Fig. 20 may be displayed. That is, the displayed screen may include information on a determined power source, discharging profits, contents for querying how much power is discharged from the HPS 400, and contents for querying a user so as to determine whether to permit the discharging of the HPS 400. Additionally, the UTD 500 may display an accept button for permitting the discharging of the HPS 400 and a reject button for rejecting the charging of the HPS 400.

When the reject button is selected, the UTD 500 transmits an HPS discharging rejection message to the HCCS 300 and a procedure for discharging the HPS 400 stops.

When the accept button is selected, the UTD 500 transmits an HPS discharging permission message to the HCCS 300 and a procedure for discharging the HPS 400 continues.

When the discharging of the HPS 400 is permitted by a user, the UTD 500 transmits the HPS discharging permission message to the HCCS 300 in operation S737. At this point, the HPS discharging permission message may include information on how much power is discharged from the EV 100.

Upon the receipt of the HPS discharging permission message from the UTD 500, the HCCS 300 transmits an HPS discharging start instruction message to the HPS 400 and instructs starting the discharging of the battery 440 of the HPS 400 in operation S739. At this point, the HPS discharging start instruction message may include discharging amount information on how much power is discharged from the HPS 400.

Upon the receipt of the HPS discharging permission message from the UTD 500, the HCCS 300 controls starting the discharging of the HPS 400 according to a permitted HPS discharging amount in the discharging permission message in operation S740. If the power sink is the EV 100, the HCCS 300 may transmit a discharging start control message to part or all of the EV 100, the EVSE 200, and the HPS 400 and may start the discharging of the HPS 400. If the power sink is the power supply facility 600, the HCCS 300 may transmit a discharging start control message to part or all of the HPS 400, the EVSE 200, and the power supply facility 600 and may start the discharging of the HPS 400. At this point, the discharging start control message may include part or all of information on the above-mentioned best available option and information on a discharging amount in the discharging permission message.

During the discharging of the EV 100, the UTD 500 may transmit an HPS discharging information request message to the HCCS 300 in operation S741.

In response to the HPS discharging information request message of the UTD 500, or periodically, or in response to satisfaction of other conditions, the HCCS 300 transmits an HPS discharging information request message to the HPS 400 to request information on the discharging of the battery 440 of the HPS 400 from the HPS 400 in operation S742.

In response to the HPS discharging information request message of the HCCS 300, or periodically, or in response to satisfaction of other conditions, the HPS 400 transmits an HPS discharging information response message to the HCCS 300 in operation S746. The HPS discharging information response message may include information on the discharging of the HPS 400. At this point, the discharging information may include part or all of an HPS initial SOC, an HPS current SOC, an HPS discharge start time, an HPS estimated discharge end time, an HPS actual discharge end time, and an HPS discharging status. The HPS initial SOC represents a charging degree at an initial discharging of the battery 440 of the HPS 400. The HPS current SOC represents a current charging degree of the battery 440 of the HPS 400. The HPS discharging status may represent discharging in progress or discharging completion.

In response to the HPS discharging information request message of the UTD 500, in correspondence to the reception of the HPS discharging information response message of the HPS 400, or periodically, or in correspondence to satisfaction of other conditions, the HCCS 300 transmits an HPS discharging information notification message to the UTD 500 in operation S747. The HPS discharging information notification message may include information on the discharging of the EV 100. At this point, the discharging information may include part or all of an HPS initial SOC, an HPS current SOC, an HPS discharge start time, an HPS estimated discharge end time, an HPS actual discharge end time, and an HPS discharging status.

Upon the receipt of then HPS discharging information notification message, the UTD 500 displays discharging information in operation S749. At this point, the UTD 500 may display a screen similar to Fig. 21. The UTD 500 may display an HPS discharging status, an initial SOC, a current SOC, a discharge start time, and an estimated discharge end time. Once the discharging is completed, the UTD 500 may display an actual discharge end time additionally.

Moreover, the HCCS 300 checks whether discharging is completed on the basis of an HPS discharging information response message in operation S751. The HCCS 300 may determine whether the discharging of the HPS 400 is completed on the basis of a current SOC, an actual charge end time, an estimated discharge end time, and an HPS discharging status.

When the discharging is completed, the HCCS 300 controls stopping the discharging of the HPS 400 in operation S753. If the power sink is the EV 100, the HCCS 300 may transmit a discharging stop control message to part or all of the EV 100, the EVSE 200, and the HPS 400 and may stop the discharging of the HPS 400. If the power sink is the power supply facility 600, the HCCS 300 may transmit a discharging stop control message to part or all of the HPS 400 and the power supply facility 600 and may stop the discharging of the HPS 400.

Or, when the discharging is completed, the HCCS 300 transmits an HPS discharging completion notification message to the UTD 500 in operation S755.

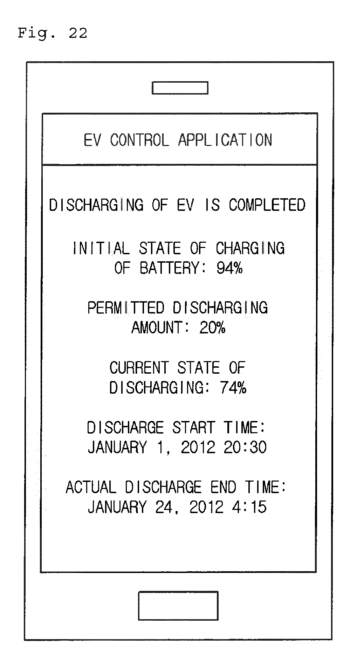

Upon the receipt of then HPS discharging completion notification message, the UTD 500 displays discharging completion in operation S757. At this point, the UTD 500 may display a screen similar to Fig. 22.

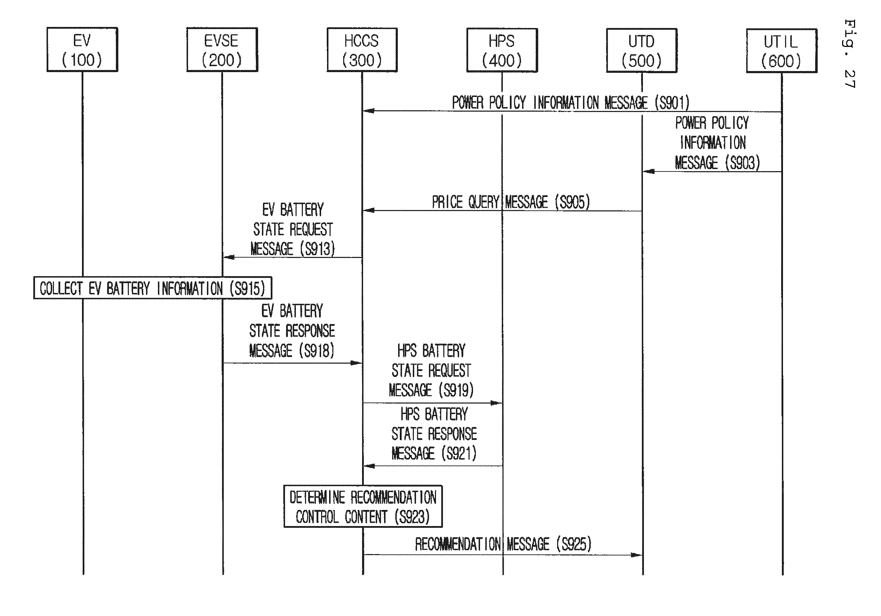

Then, a charging/discharging recommendation method according to an embodiment of the present invention will be described with reference to Fig. 27.

Fig. 27 is a ladder diagram illustrating a charging/discharging recommendation method according to an embodiment of the present invention.

Especially, in the above-mentioned EV charging method, EV discharging method, HPS charging method, and HPS charging method, the embodiment of Fig. 27 may be performed to transmit a recommendation message.

The HCCS 300 receives a power policy information message including power policy information from the power supply facility 600 periodically in operation S901. The HCCS 300 may transmit a power policy request message to the power supply facility 600 periodically and may thus receive a power policy response message including the power policy information from the power supply facility 600 periodically. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The UTD 500 receives a power policy information message including power policy information from the power supply facility 600 periodically in operation S903. The UTD 500 may transmit a power policy request message to the power supply facility 600 periodically and may thus receive a power policy response message including the power policy information from the power supply facility 600 periodically. The UTD 500 may display information on a power policy. A user may determine the charging/discharging of an EV or an HPS by referring to the displayed power policy information. Especially, a user may input a power source, a power sink, and a control time to the UTD 500. Here, the power source may be the EV 100, the HPS 400, or the power supply facility 600. Additionally, the power sink may be the EV 100, the HPS 400, or the power supply facility 600. For example, if the power sink is the EV 100, this means charging the EV 100 at the control time. If the power source is the power supply facility 600 and the power sink is the EV 100, this means charging the EV 100 with an energy from the power supply facility 600 at the control time. Moreover, if the power source is the EV 100 and the power sink is the power supply facility 600, this means discharging the EV 100 to the power supply facility 600 at the control time.

The UTD 500 transmits a price query message to the HCCS 300 in operation S905. The UTD 500 may transmit a price query message including at least one of a power source, a power sink, and a control time to the HCCS 300 and may then query the price of when transferring power from the power source to the power sink at the control time.

Upon the receipt of the price query message from the UTD 500, the HCCS 300 transmits an EV battery information request message to the EVSE 200 in operation S913.

Upon the receipt of the EV battery information request message from the HCCS 300, the EVSE 200 collects information on the battery 140 of the EV 100 in operation S915. The EVSE 200 may collect information on the battery 140 of the EV 100 by checking it through the charging/discharging point 150. The EVSE 200 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

The EVSE 200 transmits an EV battery information response message to the HCCS 300 in operation S918. At this point, the EV battery information response message may include information on the battery 140 of the EV 100.

Moreover, the HCCS 300 transmits an HPS battery information request message to the HPS 400 in operation S919.

Upon the receipt of the HPS battery information request message from the HCCS 300, the HPS 400 checks the battery 440 and transmits an HPS battery information response message including information on the checked battery 440 to the HCCS 300 in operation S921. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

The HCCS 300 determines a recommendation control content list by using the collected information in operation S923. At this point, the collected information may include at least one of information on the battery 140 of the EV 100, information on the battery 440 of the HPS 400, and information on a power policy. The recommendation control content list includes at least one recommendation control content. Each recommendation control content may include part or all of a price, a power source, a power sink, a control time, and a power amount. The price at this time may be a cost or a profit. If the recommendation control content includes all of a price, a power source, a power sink, and a control time, this may mean that the power of the power source corresponding to a corresponding power amount transfers to the power sink at the control time with a corresponding price. For example, if the power source is the power supply facility 600, the power sink is the EV 100, the control time is 13 hr, the price is 1$, and the power amount is 1 Wh, this means charging the EV 100 with a power of 1 Wh from the power supply facility 600 at a cost of 1$ at 13:00. If the power source is the EV 100, the power sink is the power supply facility 600, the control time is 13 hr, the price is 1$, and the power amount is 1 Wh, this means selling a power of 1 Wh from the EV 100 to the power supply facility 600 at a cost of 1$ at 13:00.

According to an embodiment of the present invention, the current SOC of the battery 140 of the EV 100 is greater than a reference value and an average cost spent for charging the battery 140 is less than a power purchase price of the power supply facility 600, the HCCS 300 may determine a power source as the EV 100 and also may determine a power sink as the power supply facility 600.

According to an embodiment of the present invention, the current SOC of the battery 440 of the HPS 400 is greater than a reference value and an average cost spent for charging the battery 440 is less than a power purchase price of the power supply facility 600, the HCCS 300 may determine a power source as the HPS 400 and also may determine a power sink as the power supply facility 600.

According to an embodiment of the present invention, the current SOC of the battery 140 of the EV 100 is less than a reference value and the SOC of the battery 440 of the HPS 400 is less than a reference value, the HCCS 300 may determine a power sink as the HPS 400 and the EV 100 and also may determine a power source as the power supply facility 600.

According to an embodiment of the present invention, the current SOC of the battery 140 of the EV 100 is less than a reference value, the SOC of the battery 440 of the HPS 400 is greater than a reference value, and a power purchase price of the power supply facility 600 is greater than an average cost spent for charging the battery 440, the HCCS 300 may determine a power source as the HPS 400 and the EV 100 and also may determine a power sink as the EV 100.

According to an embodiment of the present invention, the current SOC of the battery 140 of the EV 100 is less than a reference value, the SOC of the battery 440 of the HPS 400 is greater than a reference value, and a power purchase price of the power supply facility 600 is less than an average cost spent for charging the battery 440, the HCCS 300 may determine a power source as the power supply facility 600 and also may determine a power sink as the EV 100.

According to an embodiment of the present invention, the current SOC of the battery 140 of the EV 100 is greater than a reference value, the SOC of the battery 440 of the HPS 400 is less than a reference value, and a power purchase price of the power supply facility 600 is greater than an average cost spent for charging the battery 140, the HCCS 300 may determine a power source as the EV 100 and also may determine a power sink as the HPS 400.

According to an embodiment of the present invention, the current SOC of the battery 140 of the EV 100 is greater than a reference value, the SOC of the battery 440 of the HPS 400 is less than a reference value, and a power purchase price of the power supply facility 600 is less than an average cost spent for charging the battery 140, the HCCS 300 may determine a power source as the power supply facility 600 and also may determine a power sink as the HPS 400.

Then, the HCCS 300 provides a recommendation message including a recommendation control content list to the UTD 500 in operation S925.

After operation S925, part of all of the procedures shown in Figs. 7, 8, 15, 16, and 23 to 26 may be performed.

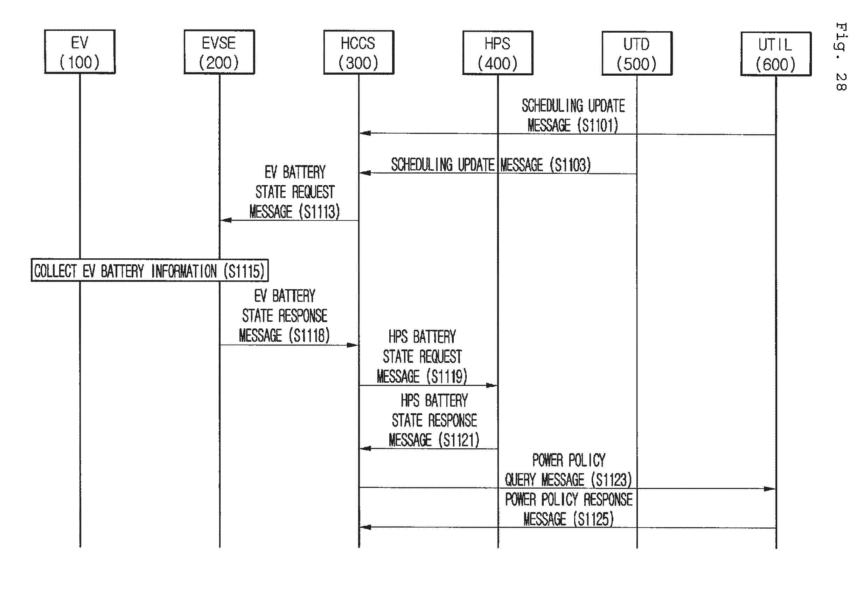

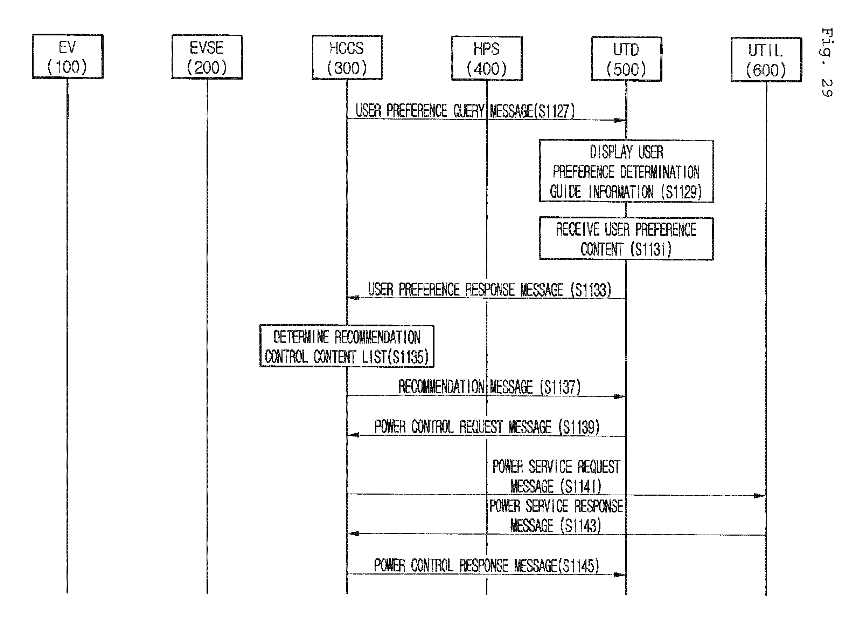

Then, a time scheduling method according to an embodiment of the present invention will be described with reference to Figs. 28 and 29.

Fig. 28 is the first part of a ladder diagram illustrating a time scheduling method according to an embodiment of the present invention. Fig. 29 is the rear part of a ladder diagram illustrating a time scheduling method according to an embodiment of the present invention.

If demands for electricity occur drastically, the power supply facility 600 transmits a scheduling update message including scheduling information on the power supply facility 600 to the HCCS 300 in operation S1101. At this point, the scheduling information on the power supply facility 600 may include information on at least one time slot. Information on each time slot may include part or all of information on whether the power supply facility 600 is capable of selling or purchasing power in a corresponding time slot and information on a power amount sold or purchased in a corresponding time slot.

When the timing of the charging or discharging of the EV 100 or the charging or discharging of the HPS 400 is missed, a user may attempt to change the charging/discharging scheduling of the EV 100 or the HPS 400. Upon the receipt of such scheduling change information from a user, the UTD 500 transmits a scheduling update message including user scheduling information to the HCCS 300 in operation S1103. At this pint, the user scheduling information may include information on a time slot that a user uses the EV 100 and a time slot that a user does not use the EV 100.

Upon the receipt of the scheduling update message from the power supply facility 600 or the UTD 500, the HCCS 300 transmits an EV battery information request message to the EVSE 200 in operation S1113.

Upon the receipt of the EV battery information request message from the HCCS 300, the EVSE 200 collects information on the battery 140 of the EV 100 in operation S1115. The EVSE 200 may collect information on the battery 140 of the EV 100 by checking it through the charging/discharging point 150. The EVSE 200 may collect information on the battery 140 of the EV 100 through the measurement device 120 such as an EUMD. The information on the battery 140 of the EV 100 may include part or all of the total capacity of the battery 140, the remaining power amount in the battery 140, a power amount necessary for fully charging the battery 140, a current SOC of the battery 140, and an average cost spent for charging the battery 140. Especially, the current SOC of the battery 140 may be expressed as a percentage.

The EVSE 200 transmits an EV battery information response message to the HCCS 300 in operation S1118. At this point, the EV battery information response message may include information on the battery 140 of the EV 100.

Moreover, the HCCS 300 transmits an HPS battery information request message to the HPS 400 in operation S1119.

Upon the receipt of the HPS battery information request message from the HCCS 300, the HPS 400 checks the battery 440 and transmits an HPS battery information response message including information on the checked battery 440 to the HCCS 300 in operation S1121. At this point, the information on the battery 440 of the HPS 400 may include at least one of the total capacity of the battery 440, the remaining power amount in the battery 440, a power amount necessary for fully charging the battery 440, a current SOC of the battery 440, and an average cost spent for charging the battery 440. Especially, the current SOC of the battery 440 may be expressed as a percentage.

Moreover, the HCCS 300 transmits a power policy request message to the power supply facility 600 in operation S1123.

Upon the receipt of the power policy request message from the HCCS 300, the power supply facility 600 transmits a power policy response message including information on a power policy to the HCCS 300 in operation S1125. At this point, the information on a power policy may include at least one of information on a power sale available time slot, information on a power sale price, information on a power purchase available time slot, and information on a power purchase price. The power sale available time zone is a time zone in which the power supply facility 600 is capable of selling power to the outside; the power sale price is a price at which the power supply facility 600 sells power to the outside; the power purchase available time zone is a time zone in which the power supply facility 600 is capable of purchasing power from the outside; and the power purchase price is a price at which the power supply facility 600 purchases power from the outside.

The HCCS 300 transmits a user preference query message to the UTD 500 in operation S1127. At this point, the user preference query message may include part or all of information on the battery 140 of the EV 100, information on the battery 440 of the HPS 400, and information on a power policy.

The UTD 500 displays information included in the user preference query message to provide guide information for determining a user preference to a user in operation S1129.

The UTD 500 receives a user preference content in operation S1131. At this point, the user preference content may include part or all of a preference for price, a preference for time, and a preference for power amount for charging and discharging.

The UTD 500 transmits a user preference response message including the user preference content to the HCCS 300 in operation S1133.

The HCCS 300 determines a recommendation control content list by using the collected information in operation S1135. At this point, the collected information may include part or all of information on the battery 140 of the EV 100, information on the battery 440 of the HPS 400, information on a power policy, a user preference content, user scheduling information, and power supply facility scheduling information. The recommendation control content list includes at least one recommendation control content. Each recommendation control content may include part or all of a price, a power source, a power sink, a control time, and a power amount. The price at this time may be a cost or a profit from a user perspective view. The control time may mean a reservation time. If the recommendation control content includes all of a price, a power source, a power sink, and a control time, this may mean that the power of the power source corresponding to a corresponding power amount transfers to the power sink at the control time with a corresponding price. For example, if the power source is the power supply facility 600, the power sink is the EV 100, the control time is 13 hr, the price is 1$, and the power is 1 Wh, this means charging the EV 100 with a power of 1 Wh from the power supply facility 600 at a cost of 1$ at 13:00. If the power source is the EV 100, the power sink is the power supply facility 600, the control time is 13 hr, the price is 1$, and the power is 1 Wh, this means selling a power of 1 Wh from the EV 100 to the power supply facility 600 at a cost of 1$ at 13:00.

According to an embodiment of the present invention, the current SOC of the battery 140 of the EV 100 is greater than a reference value and an average cost spent for charging the battery 140 is less than a power purchase price of the power supply facility 600, the HCCS 300 may determine a power source as the EV 100 and also may determine a power sink as the power supply facility 600. At this point, the HCCS 300 may determine a control time on the basis of information on a time slot in which a user does not use the EV 100 and information on a time slot in which the power supply facility 600 is capable of purchasing power.

According to an embodiment of the present invention, the current SOC of the battery 440 of the HPS 400 is greater than a reference value and an average cost spent for charging the battery 440 is less than a power purchase price of the power supply facility 600, the HCCS 300 may determine a power source as the HPS 400 and also may determine a power sink as the power supply facility 600. At this point, the HCCS 300 may determine a control time on the basis of information on a time slot in which the power supply facility 600 is capable of purchasing power.

According to an embodiment of the present invention, the current SOC of the battery 140 of the EV 100 is less than a reference value and the SOC of the battery 440 of the HPS 400 is less than a reference value, the HCCS 300 may determine a power sink as the HPS 400 and the EV 100 and also may determine a power source as the power supply facility 600. At this point, the HCCS 300 may determine a control time on the basis of information on a time slot in which a user does not use the EV 100 and information on a time slot in which the power supply facility 600 is capable of selling power.

According to an embodiment of the present invention, the current SOC of the battery 140 of the EV 100 is less than a reference value, the SOC of the battery 440 of the HPS 400 is greater than a reference value, and a power purchase price of the power supply facility 600 is greater than an average cost spent for charging the battery 440, the HCCS 300 may determine a power source as the HPS 400 and the EV 100 and also may determine a power sink as the EV 100. At this point, the HCCS 300 may determine a control time on the basis of information on a time slot in which a user does not use the EV 100.

According to an embodiment of the present invention, the current SOC of the battery 140 of the EV 100 is less than a reference value, the SOC of the battery 440 of the HPS 400 is greater than a reference value, and a power purchase price of the power supply facility 600 is less than an average cost spent for charging the battery 440, the HCCS 300 may determine a power source as the power supply facility 600 and also may determine a power sink as the EV 100. At this point, the HCCS 300 may determine a control time on the basis of information on a time slot in which a user does not use the EV 100 and information on a time slot in which the power supply facility 600 is capable of selling power.

According to an embodiment of the present invention, the current SOC of the battery 140 of the EV 100 is greater than a reference value, the SOC of the battery 440 of the HPS 400 is less than a reference value, and a power purchase price of the power supply facility 600 is greater than an average cost spent for charging the battery 140, the HCCS 300 may determine a power source as the EV 100 and also may determine a power sink as the HPS 400. At this point, the HCCS 300 may determine a control time on the basis of information on a time slot in which a user does not use the EV 100.

According to an embodiment of the present invention, the current SOC of the battery 140 of the EV 100 is greater than a reference value, the SOC of the battery 440 of the HPS 400 is less than a reference value, and a power purchase price of the power supply facility 600 is less than an average cost spent for charging the battery 140, the HCCS 300 may determine a power source as the power supply facility 600 and also may determine a power sink as the HPS 400. At this point, the HCCS 300 may determine a control time on the basis of information on a time slot in which the power supply facility 600 is capable of selling power.

Then, the HCCS 300 transmits a recommendation message including a recommendation control content list to the UTD 500 in operation S1137.

The UTD 500 transmits a power control request message including selection information on at least one of recommendation control contents in the recommendation control content list to the HCCS 300 in operation S1139.

The HCCS 300 transmits a power service request message to the power supply facility 600 to request a power service according to the selected recommendation control content from the power supply facility 600 in operation S1141. At this point, the power service request message may include information on the selected recommendation control content.

The power supply facility 600 checks whether to provide the power service according to the selected recommendation control content and then transmits a power service response message to the HCCS 300 in operation S1143. At this point, the power service response message includes information on whether the power supply facility 600 is capable of providing the power service according to the selected recommendation control content.

The HCCS 300 transmits the power control response message to the UTD 500 in operation S1145. At this point, the power control response message may include information on whether a power control is possible according to the selected recommendation control content.

After operation S1145, part of all of the procedures shown in Figs. 7, 8, 15, 16, and 23 to 26 may be performed.

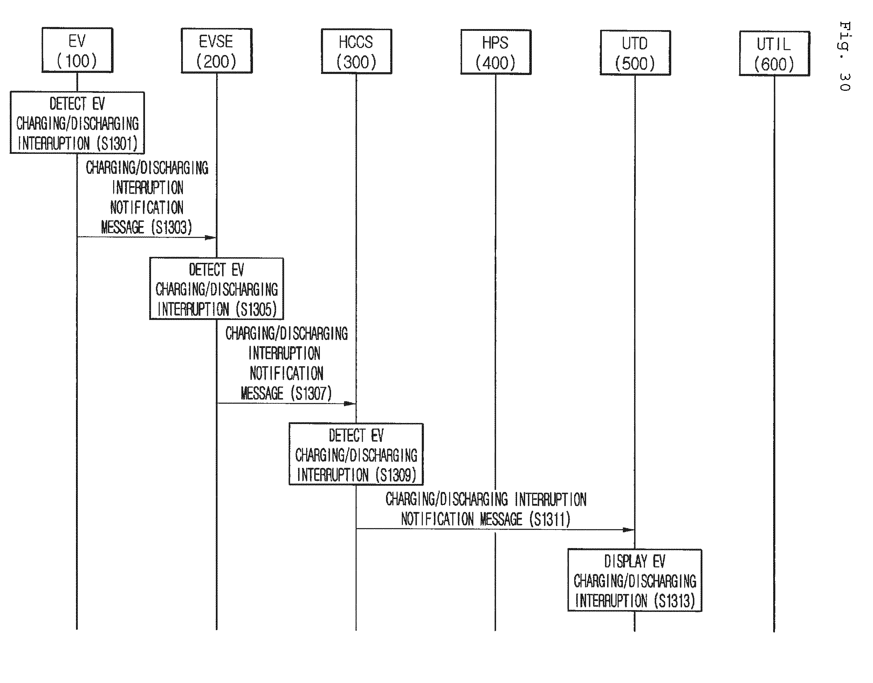

Then, an interruption information providing method according to an embodiment of the present invention will be described with reference to Fig. 30.

Fig. 30 is a ladder diagram illustrating an interruption information providing method according to an embodiment of the present invention.

Especially, the procedure of Fig. 30 may be performed during the charging or discharging of the EV 100 according to the embodiments of Figs. 7 to 29.

If an interruption factor of the charging or discharging of the EV 100 is detected by the EV 100 in operation S1301, the EV 100 transmits a charging/discharging interruption notification message to the EVSE 200 in operation S1303. At this point, the charging/discharging interruption notification message may include information on an interruption factor of charging or discharging. The interruption factor of charging or discharging may be an external factor such as a plug unplugged by a dog or a people or blackout or may be an internal factor of the EV 100 such as a circuit problem.

If analyzing a charging/discharging interruption notification message from the EV 100 or detecting an interruption factor of the charging or discharging of the EV 100 through other detection means in operation S1305, the EVSE 200 transmits a charging/discharging interruption notification message to the HCCS 300 in operation S1307. At this point, the charging/discharging interruption notification message transmitted by the EVSE 200 may include information on an interruption factor of charging or discharging detected by the EVSE 200.

If analyzing a charging/discharging interruption notification message from the EVSE 200 or detecting an interruption factor of the charging or discharging of the EV 100 through other detection means in operation S1309, the HCCS 300 transmits a charging/discharging interruption notification message to the UTD 500 in operation S1311. At this point, the charging/discharging interruption notification message transmitted by the HCCS 300 may include information on an interruption factor of charging or discharging detected by the HCCS 300. Especially, the HCCS 300 may detect whether the charging/discharging of the EV 100 is interrupted on the basis of the above-mentioned EV charging information or EV discharging information. In more detail, if it is checked that the current SOC is maintained for a predetermined time, the HCCS 300 may detect that the charging/discharging of the EV 100 is interrupted.

Upon the receipt of a charging/discharging interruption notification message, the UTD 500 displays the EV charging/discharging interruption in operation S1313. At this point, the UTD 500 may display a charging/discharging interruption factor in addition to that the charging/discharging of the EV 100 is interrupted.

According to an embodiment of the present invention, the above method also can be embodied as computer readable codes on a computer readable recording medium having a program recorded thereon. Examples of the computer readable recording medium include read-only memory (ROM), random-access memory (RAM), CD-ROMs, magnetic tapes, floppy disks, and optical data storage devices and also include carrier waves (such as data transmission through the Internet).

The above-described mobile terminal is not applied as limited to the configurations and methods of the above embodiments. Some or all of the above embodiments are selectively combined and configured to provide various modifications.

## Claims

1. An operating method of a home communication control device installed at home and controlling charging of an electric vehicle, the method comprising:
receiving first battery information on a first battery of the electric vehicle;
receiving second battery information on a second battery of a home power storage device;
receiving power policy information from a power supply facility;
determining an available option for charging of the first battery on the basis of the first battery information, the second battery information, and the power policy information; and
controlling the charging of the first battery according to the available option.

2. The method according to claim 1, further comprising:
receiving charging information of the first battery; and
transmitting the charging information of the first battery to a user terminal device.

3. The method according to claim 2, wherein the charging information comprises at least one of information on an initial state of charging, information on a current state of charging, information on a charge start time, information on an estimated charge end time, information on an actual end time, and information on an electric vehicle charging status.

4. The method according to claim 1, further comprising:
checking a charging completion of the first battery on the basis of the charging information of the first battery; and
notifying the charging completion of the first battery to a user terminal device when the charging completion of the first battery is checked.

5. The method according to claim 1, further comprising:
detecting an interruption factor for the charging of the first battery; and
if the interruption factor for the charging of the first battery is detected, transmitting an interruption factor notification message including information on the interruption factor for the charging of the first battery to a user terminal device.

6. The method according to claim 1, wherein the controlling of the charging of the first battery according to the available option comprises:
transmitting information on the available option to a user terminal device; and
receiving a permission message for the charging of the first battery according to the available option from the user terminal device.

7. The method according to claim 1, wherein the first battery information comprises at least one of information on a total capacity of the first battery, information on a remaining power amount in the first battery, information on a power amount necessary for fully charging the first battery, information on a current state of charging of the first battery, and information on an average cost spent for charging the first battery.

8. The method according to claim 1, wherein the second battery information comprises at least one of information on a total capacity of the second battery, information on a remaining power amount in the second battery, information on a power amount necessary for fully charging the second battery, information on a current state of charging of the second battery, and information on an average cost spent for charging the second battery.

9. The method according to claim 1, wherein the power policy information comprises at least one of information on a power sale available time slot, information on a power sale price, information on a power purchase available time slot, and information on a power purchase price,
wherein
the power sale available time slot is a time slot in which the power supply facility is capable of selling power to the outside;
the power sale price is a price at which the power supply facility sells power to the outside;
the power purchase available time slot is a time slot in which the power supply facility is capable of purchasing power from the outside; and
the power purchase price is a price at which the power supply facility purchases power from the outside.

10. The method according to claim 1, wherein the available option comprises at least one of a power source for charging the first battery, a charging time slot, and a charging amount.

11. An operating method of a home communication control device installed at home and controlling discharging of an electric vehicle, the method comprising:
receiving first battery information on a first battery of the electric vehicle;
receiving second battery information on a second battery of a home power storage device;
receiving power policy information from a power supply facility;
determining an available option for discharging of the first battery on the basis of the first battery information, the second battery information, and the power policy information; and
controlling the discharging of the first battery according to the available option.

12. The method according to claim 11, wherein the available option comprises at least one of a power sink for discharging the first battery, a discharging time slot, and a discharging amount.

13. An operating method of a home communication control device installed at home and controlling charging of a home power storage device, the method comprising:
receiving first battery information on a first battery of an electric vehicle;
receiving second battery information on a second battery of the home power storage device;
receiving power policy information from a power supply facility;
determining an available option for charging of the second battery on the basis of the first battery information, the second battery information, and the power policy information; and
controlling the charging of the second battery according to the available option.

14. The method according to claim 13, wherein the available option comprises at least one of a power source for charging the second battery, a charging time slot, and a charging amount.

15. An operating method of a home communication control device installed at home and controlling discharging of a home power storage device, the method comprising:
receiving first battery information on a first battery of an electric vehicle;
receiving second battery information on a second battery of the home power storage device;
receiving power policy information from a power supply facility;
determining an available option for discharging of the second battery on the basis of the first battery information, the second battery information, and the power policy information; and
controlling the discharging of the second battery according to the available option.

16. The method according to claim 15, wherein the available option comprises at least one of a power sink for charging the second battery, a discharging time slot, and a discharging amount.

17. An operating method of a home communication control device installed at home, the method comprising:
receiving first battery information on a first battery of an electric vehicle;
receiving second battery information on a second battery of a home power storage device;
receiving power policy information from a power supply facility;
determining at least one recommendation power control content on the basis of the first battery information, the second battery information, and the power policy information; and
controlling at least one of the first battery and the second battery according to a control content selected from the at least one recommendation power control content.

18. The method according to claim 17, wherein each of the at least one recommendation power control content comprises at least one of a price, a power source, a power sink, a control time, and a power amount,
wherein
the power source is determined from among the first battery, the second battery, and the power supply facility; and
the power sink is determined from among the first battery, the second battery, and the power supply facility.

19. An operating method of a home communication control device installed at home, the method comprising:
receiving scheduling information of an electric vehicle;
receiving power policy information from a power supply facility;
determining at least one recommendation power control content on the basis of the scheduling information of the electric vehicle and the power policy information; and
controlling at least one of a first battery and a second battery according to a control content selected from the at least one recommendation power control content.

20. The method according to claim 19, further comprising:
receiving first battery information on the first battery of the electric vehicle; and
receiving second battery information on the second battery of a home power storage device,
wherein the determining of the at least one recommendation power control content comprises determining the at least one recommendation power control content on the basis of the first battery information and the second battery information.
